(19) Europäisches Patentamt
European Patent Office
Office européen des brevets

(11) **EP 3 745 545 A1**

(12) **EUROPEAN PATENT APPLICATION**
published in accordance with Art. 153(4) EPC

(43) Date of publication:
**02.12.2020 Bulletin 2020/49**

(51) Int Cl.:
**H01S 3/00** *(2006.01)*   **G01N 21/65** *(2006.01)*

(21) Application number: **19744133.0**

(22) Date of filing: **15.01.2019**

(86) International application number:
**PCT/JP2019/000942**

(87) International publication number:
**WO 2019/146452 (01.08.2019 Gazette 2019/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.01.2018 JP 2018009233**

(71) Applicant: **Fujikura, Ltd.**
**Tokyo 135-8512 (JP)**

(72) Inventors:
• **WANG, Yu**
  **Sakura-shi, Chiba 285-8550 (JP)**
• **KASHIWAGI, Masahiro**
  **Sakura-shi, Chiba 285-8550 (JP)**

(74) Representative: **Plasseraud IP**
**66, rue de la Chaussée d'Antin**
**75440 Paris Cedex 09 (FR)**

(54) **MONITORING DEVICE, LASER APPARATUS, MONITORING METHOD, AND MANUFACTURING METHOD FOR LASER APPARATUS**

(57)   An object is to provide a monitoring device that is capable of monitoring the power of at least one of Stokes light and anti-Stokes light resulting from, in a multi-mode fiber, four-wave mixing in which a plurality of guide modes are involved. A laser apparatus (1) includes a laser delivery fiber (LDF) which is a multi-mode fiber and a detector (D) which is a monitoring device. The detector (D) is configured to detect light, belonging to a wavelength range that includes the peak wavelength of at least one of Stokes light and anti-Stokes light (resulting from, in the multi-mode fiber (LDF), four-wave mixing in which a plurality of guide modes are involved), in preference to light belonging to another wavelength range.

FIG. 1

**Description**

Technical Field

The present invention relates to a monitoring device and a monitoring method. The present invention also relates to a laser apparatus including a monitoring device and a method of producing the laser apparatus.

Background Art

In the field of material processing, fiber laser apparatuses have been widely used in recent years. A fiber laser apparatus is a laser apparatus whose laser medium is an optical fiber having a core doped with rare earth (hereinafter may be referred to as "amplifying optical fiber"). Known examples of the fiber laser apparatus include resonator-type fiber laser apparatuses and MOPA-type fiber laser apparatuses.

As a fiber laser apparatus increases in power, nonlinear optical effect becomes significant. For example, it is known that scattered light generated by stimulated Raman scattering (stimulated Raman scattering is a kind of nonlinear optical effect) is a cause of making oscillation of laser light unstable and causing a reduction in reliability of a pump light source that supplies pump light to an amplifying optical fiber.

A technique to address such an issue is disclosed in, for example, Patent Literature 1. Patent Literature 1 discloses a fiber laser apparatus that detects power of scattered light generated by stimulated Raman scattering and controls an excitation light source in accordance with the detected power.

Citation List

[Patent Literature]

[Patent Literature 1]
Japanese Patent Application Publication, *Tokukai,* No. 2015-95641

Summary of Invention

Technical Problem

The inventors of the present invention have found that light outputted from a fiber laser apparatus including a multi-mode fiber contains Stokes light and anti-Stokes light resulting from four-wave mixing in which a plurality of guide modes are involved.

The Stokes light and anti-Stokes light resulting from four-wave mixing, when they are large in power, are causes of, similarly to the scattered light generated by stimulated Raman scattering, making oscillation of laser light unstable and causing a reduction in reliability of a pump light source that supplies pump light to an amplifying optical fiber. Therefore, in order to achieve a fiber laser apparatus that is unlikely to make oscillation of laser light unstable or unlikely to cause a reduction in reliability of a pump light source, it is important to monitor the power of at least one of Stokes light and anti-Stokes light resulting from four-wave mixing.

The above issue may arise not only in fiber laser apparatuses but also in general laser apparatuses including a multi-mode fiber that guides laser light. The present invention was made in view of such an issue, and an object thereof is to provide a monitoring device, a laser apparatus, a monitoring method, or a method of producing a laser apparatus, each of which monitors the power of at least one of Stokes light and anti-Stokes light resulting from, in a multi-mode fiber, four-wave mixing in which a plurality of guide modes are involved.

Solution to Problem

In order to attain the above object, a monitoring device in accordance with an aspect of the present invention includes a detector configured to detect light, belonging to a wavelength range that includes a peak wavelength of at least one of Stokes light and anti-Stokes light, in preference to light belonging to another wavelength range, the Stokes light and anti-Stokes light resulting from, in a multi-mode fiber configured to guide laser light, four-wave mixing in which a plurality of guide modes are involved.

In order to attain the above object, a monitoring method in accordance with an aspect of the present invention includes detecting light, belonging to a wavelength range that includes a peak wavelength of at least one of Stokes light and anti-Stokes light, in preference to light belonging to another wavelength range, the Stokes light and anti-Stokes light resulting from, in a multi-mode fiber configured to guide laser light, four-wave mixing in which a plurality of guide modes are involved.

In order to attain the above object, a method of producing a laser apparatus in accordance with an aspect of the present invention is a method of producing a laser apparatus including (i) a multi-mode fiber configured to guide laser light and (ii) a detector configured to detect light belonging to a specific wavelength range in preference to light belonging to another wavelength range, the method including: a) determining a peak wavelength of at least one of Stokes light and anti-Stokes light resulting from, in the multi-mode fiber, four-wave mixing in which a plurality of guide modes are involved; and b) setting the specific wavelength range, in which the detector preferentially detects light, such that the specific wavelength range includes the peak wavelength determined in step a).

Advantageous Effects of Invention

According to an aspect of the present invention, it is possible to provide a monitoring device, a laser apparatus, a monitoring method, or a method of producing a laser apparatus, each of which monitors the power of at least one of Stokes light and anti-Stokes light resulting from, in a multi-mode fiber, four-wave mixing in which a plurality of guide modes are involved.

Brief Description of Drawings

Fig. 1 is a block diagram illustrating a configuration of a laser apparatus in accordance with Embodiment 1 of the present invention.
Fig. 2 is a block diagram illustrating a configuration of a laser apparatus in accordance with Embodiment 2 of the present invention.
Fig. 3 is a block diagram illustrating a configuration of a laser apparatus in accordance with Embodiment 3 of the present invention.
Fig. 4 is a block diagram illustrating a configuration of a laser apparatus in accordance with Embodiment 4 of the present invention.
Fig. 5 is a block diagram illustrating a configuration of a laser apparatus in accordance with Embodiment 5 of the present invention.
Fig. 6 is a chart showing spectra of light outputted from a fiber laser apparatus that includes a multi-mode fiber.

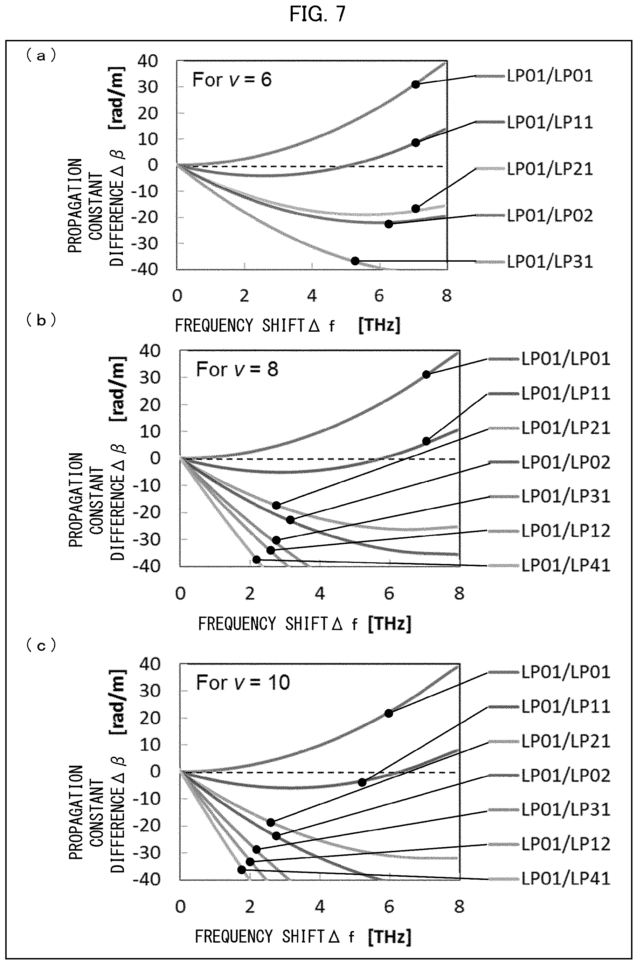

(a) of Fig. 7 is a chart showing the frequency shift dependence of a propagation constant difference with regard to a multi-mode fiber having a v-parameter of 6. (b) of Fig. 7 is a chart showing the frequency shift dependence of a propagation constant difference with regard to a multi-mode fiber having a v-parameter of 8. (c) of Fig. 7 is a chart showing the frequency shift dependence of a propagation constant difference with regard to a multi-mode fiber having a v-parameter of 10.

Description of Embodiments

The inventors of the present invention have found that light outputted from a fiber laser apparatus including a multi-mode fiber contains Stokes light and anti-Stokes light resulting from four-wave mixing in which a plurality of guide modes are involved.

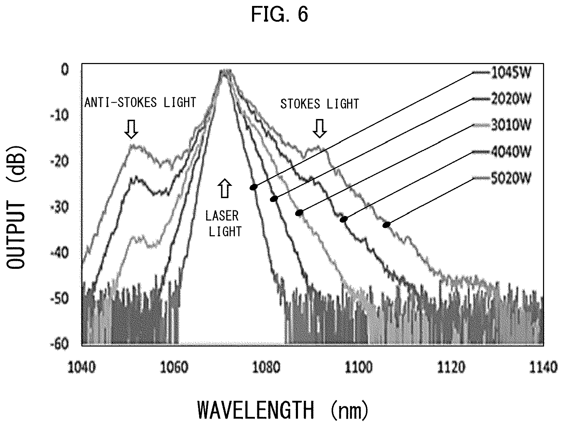

Fig. 6 is a chart showing spectra of light outputted from a fiber laser apparatus. The spectra of the light shown in the chart of Fig. 6 correspond to cases where the power of the laser light is 1045 W, 2020 W, 3010 W, 4040 W, and 5020 W, and are normalized to peak power. In the chart of Fig. 6, the peak that appears at 1070 nm corresponds to laser light oscillated by the fiber laser apparatus. The chart of Fig. 6 confirms that light having a peak wavelength longer than that of the laser light and light having a peak wavelength shorter than that of the laser light are present in addition to the laser light. The chart of Fig. 6 also confirms that the power of each of these two kinds of light increases exponentially relative to the power of the laser light.

The inventors conducted a study and found that these two kinds of light are Stokes light and anti-Stokes light which result from, in a multi-mode fiber, four-wave mixing in which a plurality of guide modes are involved. More specifically, the inventors found that these two kinds of light are Stokes light and anti-Stokes light which result from four-wave mixing in which LPO1 mode and LP11 mode are involved. Note that, in a case where four-wave mixing in which LPO1 mode and some other higher order mode other than LP11 mode are involved or four-wave mixing in which two higher order modes are involved occurs in the multi-mode fiber, Stokes light and anti-Stokes light resulting from such four-wave mixing can be contained in the light outputted from the laser apparatus.

Note that the spectra of the light shown in Fig. 6 are obtained by a fiber laser apparatus that has a means to reduce scattered light generated by stimulated Raman scattering. In a case of a fiber laser apparatus that does not have such a means, it may be difficult to confirm the presence of Stokes light resulting from four-wave mixing. This is because, according to a fiber laser apparatus that does not have such a means, the peak of the Stokes light resulting from four-wave mixing may be masked by the peak of the scattered light generated by stimulated Raman scattering. The inventors employed a technique to reduce the scattered light generated by stimulated Raman scattering in a fiber laser apparatus including a multi-mode fiber, and thereby for the first time succeeded in confirming the presence of Stokes light and anti-Stokes light resulting from four-wave mixing.

The following description will discuss an embodiment of a monitoring device that is capable of monitoring Stokes light and anti-Stokes light resulting from, in a multi-mode fiber, four-wave mixing in which a plurality of guide modes are involved, and a laser apparatus including such a monitoring device.

[Embodiment 1]

(Configuration of laser apparatus)

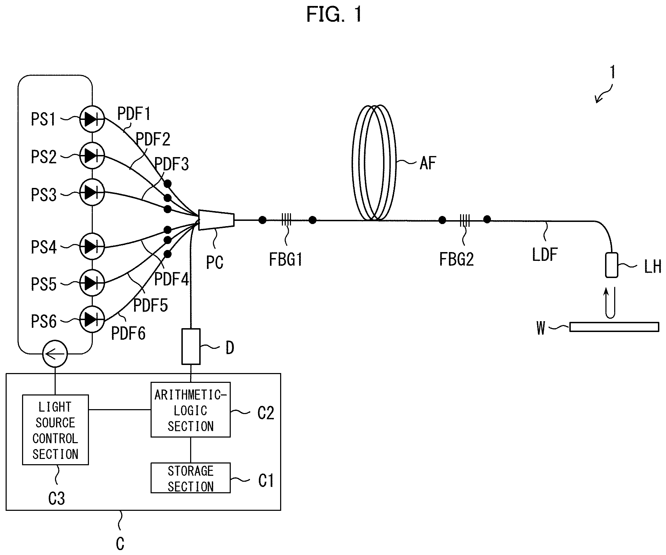

The following description will discuss a laser apparatus 1 in accordance with Embodiment 1 of the present invention, with reference to Fig. 1. Fig. 1 is a block diagram illustrating a configuration of the laser apparatus 1.

The laser apparatus 1 is a fiber laser apparatus for machining, and causes oscillation of single wavelength laser light. As illustrated in Fig. 1, the laser apparatus 1 includes m pump light sources PS1 to PSm, m pump delivery fibers PDF1 to PDFm, a pump combiner PC, an amplifying optical fiber AF, two fiber Bragg gratings FBG1 and FBG2, a laser delivery fiber LDF, a laser head LH, a detector D as a monitoring device, and a control section C as a control device. The pump light sources PS1 to PS $m$ and the pump delivery fibers PDF1 to PDF $m$ are in one-to-one correspondence with each other. Note here that $m$ is a natural number of 2 or more, and represents the number of pump light sources PS1 to PS$m$ and the number of the pump delivery fibers PDF1 to PDF$m$. Fig. 1 shows an example of a configuration of the laser apparatus 1 in a case where $m$ = 6. In this section, configurations of members other than the detector D and the control section C are discussed.

Each of the pump light sources PSj ($j$ is a natural number of 1 or more and $m$ or less) emits pump light. The pump light can be, for example, laser light having a peak wavelength of $975\pm3$ nm or $915\pm3$ nm. In Embodiment 1, the pump light sources PS1 to PS$m$ are laser diodes. Each of the pump light sources PS$j$ is connected to an input end of a corresponding pump delivery fiber PDF$j$. The pump light emitted by the pump light sources PS$j$ is introduced into respective corresponding pump delivery fibers PDF$i$.

The pump delivery fibers PDF$j$ guide the pump light emitted by the corresponding pump light sources PS$j$. Output ends of the pump delivery fibers PDF$j$ are connected to an input port of the pump combiner PC. The pump light guided through the pump delivery fibers PDF$j$ is introduced into the pump combiner PC via the input port.

The pump combiner PC combines pump light guided through the pump delivery fibers PDF1 to PDF$m$. An output port of the pump combiner PC is connected to an input end of the amplifying optical fiber AF via the first fiber Bragg grating FBG1. A portion, which has passed through the first fiber Bragg grating FBG1, of the pump light combined at the pump combiner PC is introduced into the amplifying optical fiber AF.

The amplifying optical fiber AF uses the pump light that has passed through the first fiber Bragg grating FBG1 to thereby amplify laser light belonging to a specific wavelength range (hereinafter referred to as "amplification bandwidth"). In Embodiment 1, the amplifying optical fiber AF is a double-clad fiber having a core doped with a rare-earth element (such as ytterbium, thulium, cerium, neodymium, europium, erbium, and/or the like). In this case, the pump light that has passed through the first fiber Bragg grating FBG1 is used to keep the rare-earth element in population inversion state. For example, in a case where the rare-earth element contained in the core is ytterbium, the amplification bandwidth of the amplifying optical fiber AF is, for example, the wavelength range of from 1000 nm to 1100 nm inclusive. In this case, the wavelength of laser light oscillated by the laser apparatus 1 is set to 1000 nm or longer and 1100 nm or less. An output end of the amplifying optical fiber AF is connected to an input end of the laser delivery fiber LDF via the second fiber Bragg grating FBG2.

The fiber Bragg gratings FBG1 and FBG2 reflect laser light belonging to a specific wavelength range (hereinafter referred to as "reflection bandwidth") that is included in the amplification bandwidth of the amplifying optical fiber AF. The first fiber Bragg grating FBG1 is higher in reflectivity in the reflection bandwidth than the second fiber Bragg grating FBG2, and serves as a mirror. The first fiber Bragg grating FBG1 can be, for example, a fiber Bragg grating that (i) has a reflection bandwidth whose central wavelength is $1070\pm3$ nm and whose full width at half maximum is $3.5\pm0.5$ nm and (ii) has a reflectivity of 99% or more in that reflection bandwidth. On the contrary, the second fiber Bragg grating FBG2 is lower in reflectivity in the reflection bandwidth than the first fiber Bragg grating FBG1, and serves as a half mirror. The second fiber Bragg grating FBG2 can be, for example, a fiber Bragg grating that (i) has a reflection bandwidth whose central wavelength is $1070\pm3$ nm and whose full width at half maximum is $3.5\pm0.5$ nm and (ii) has a reflectivity of 60% in that reflection bandwidth. Therefore, laser light belonging to the reflection bandwidth of the fiber Bragg gratings FBG1 and FBG2 is reflected repeatedly between the fiber Bragg gratings FBG1 and FBG2 and recursively amplified in the amplifying optical fiber AF. As such, the amplifying optical fiber AF and the fiber Bragg gratings FBG1 and FBG2 together form an oscillator that causes oscillation of laser light belonging to the reflection bandwidth of the fiber Bragg gratings FBG1 and FBG2. A portion, which has passed through the second fiber Bragg grating FBG2, of the laser light recursively amplified in the amplifying optical fiber AF is introduced into the laser delivery fiber LDF. Note that the central wavelength of the reflection bandwidth of the fiber Bragg gratings FBG1 and FBG2 can be, instead of 1070±3 nm, for example, 1030 nm, 1040 nm, 1050 nm, 1060 nm, 1070 nm, 1080 mm, 1087±6 nm, or 1090 nm. Accordingly, the oscillation wavelength of the laser apparatus 1 can be, instead of 1070±3 nm, for example, 1030 nm, 1040 nm, 1050 nm, 1060 nm, 1070 nm, 1080 mm, 1087±6 nm, or 1090 nm.

The laser delivery fiber LDF guides the laser light that has passed through the second fiber Bragg grating FBG2. An output end of the laser delivery fiber LDF is connected to the laser head LH. The laser light that has been guided through the laser delivery fiber LDF is applied to a workpiece W via the laser head LH.

(Four-wave mixing in multi-mode fiber)

The amplifying optical fiber AF, the fiber Bragg gratings FBG1 and FBG2, and the laser delivery fiber LDF, which are included in the laser apparatus 1, can each be realized by a multi-mode fiber. In Embodiment 1, the laser delivery fiber LDF is a multi-mode fiber. Therefore, according to the laser apparatus 1, Stokes light can be amplified and anti-Stokes light can be generated in the laser delivery fiber LDF by four-wave mixing in which a plurality of guide modes are involved. Note that, in a case where the amplifying optical fiber AF is realized by a multi-mode fiber, four-wave mixing in which a plurality of guide modes are involved can also occur in the amplifying optical fiber AF.

As used herein, the term "four-wave mixing in which a plurality of guide modes are involved" refers to a phenomenon in which the fundamental mode component and a higher order mode component of laser light guided through a multi-mode fiber are involved as pump light or a first higher order mode component and a second higher order mode component of laser light guided through a multi-mode fiber are involved as pump light, and in which Stokes light and anti-Stokes light satisfying both frequency matching condition and phase matching condition are amplified or generated. The fundamental mode here is, for example, LP01 mode. Examples of a higher order mode include LP11 mode, LP21 mode, LP02 mode, LP31 mode, and LP12 mode.

For example, in a case where Stokes light of LP11 mode is amplified and anti-Stokes light of LP01 mode is generated by four-wave mixing in which the LPO1 mode component and the LP11 mode component of laser light guided through a multi-mode fiber are involved as pump light, the frequency matching condition and the phase matching condition can be expressed as below.

$$\text{Frequency matching condition: } \omega_s + \omega_{as} = 2\omega_p \ \dots \ (1)$$

$$\text{Phase matching condition: } \beta'(\omega_s) + \beta(\omega_{as}) = \beta(\omega_p) + \beta'(\omega_p) - \gamma(P + P') \ \dots \ (2b)$$

Alternatively, in a case where Stokes light of LP01 mode and anti-Stokes light of LP11 mode are generated by four-wave mixing in which the LP01 mode component and the LP11 mode component of laser light guided through a multi-mode fiber are involved as pump light, the frequency matching condition and the phase matching condition can be expressed as below.

$$\text{Frequency matching condition: } \omega_s + \omega_{as} = 2\omega_p \ \dots \ (1)$$

$$\text{Phase matching condition: } \beta(\omega_s) + \beta'(\omega_{as}) = \beta(\omega_p) + \beta'(\omega_p) - \gamma(P + P') \ \dots \ (2a)$$

In the above equations, $\omega_p$ represents a peak angular frequency of laser light, $\omega_s$ represents a peak angular frequency of Stokes light, and $\omega_{as}$ represents a peak angular frequency of anti-Stokes light. Furthermore, $\beta(\omega)$ represents a propagation constant of the multi-mode fiber with regard to LP01 mode having an angular frequency $\omega$, and $\beta'(\omega)$

represents a propagation constant of the multi-mode fiber with regard to LP11 mode having an angular frequency ω. Furthermore, P represents power of the LP01 mode component of the laser light, and P' represents power of the LP11 mode component of the laser light. Furthermore, γ represents a non-linear coefficient.

Note here that the "propagation constant $\beta(\omega)$ of the multi-mode fiber with regard to LPO1 mode" is given by a known polynomial expression containing the angular frequency ω as a variable. The polynomial expression contains a chromatic dispersion of the multi-mode fiber as a coefficient. Similarly, the "propagation constant $\beta'(\omega)$ of the multi-mode fiber with regard to LP11 mode" is given by a known polynomial expression containing the angular frequency ω as a variable. The polynomial expression contains a chromatic dispersion of the multi-mode fiber as a coefficient. That is, changing the chromatic dispersion of a multi-mode fiber will change the functional forms of the propagation constants $\beta(\omega)$ and $\beta'(\omega)$. Then, the change of the functional forms of the propagation constants $\beta(\omega)$ and $\beta'(\omega)$ will result in changes of peak angular frequencies $\omega_s$ and $\omega_{as}$ that satisfy both the frequency matching condition and the phase matching condition, i.e., changes of the peak angular frequencies $\omega_s$ and $\omega_{as}$ of Stokes light and anti-Stokes light. Furthermore, the changes of the peak angular frequencies $\omega_s$ and $\omega_{as}$ of the Stokes light and the anti-Stokes light will result in changes of peak wavelengths of the Stokes light and the anti-Stokes light. As such, the peak wavelengths of Stokes light and anti-Stokes light resulting from four-wave mixing in a multi-mode fiber depend on the chromatic dispersion of that multi-mode fiber. Note that the chromatic dispersion of a multi-mode fiber can be found by a known method such as measuring a refractive index distribution of the multi-mode fiber.

Note that, although the above description discussed four-wave mixing in which LP01 mode and LP11 mode are involved, the guide modes involved in four-wave mixing in the multi-mode fiber are not limited to LP01 mode and LP11 mode. Specifically, four-wave mixing in which any two guide modes selected from the modes guided through the multi-mode fiber can occur. For example, four-wave mixing in which a first higher order mode and a second higher order mode are involved, such as four-wave mixing in which LP11 mode and LP21 mode are involved, can occur. The frequency matching condition and the phase matching condition for such cases are given in the same manner as that for the four-wave mixing between LP01 mode and LP11 mode.

The inventors of the present invention calculated a propagation constant difference Δβ defined by the following equation, with regard to a combination of LP01 mode and an *LPmn* mode (LP01 mode, LP11 mode, LP21 mode, LP02 mode, LP31 mode). In the following equation (3), $\beta_{mn}$ represents a propagation constant of the LP*mn* mode, and f0 represents a frequency of laser light serving as pump light in four-wave mixing. The expression "f = f0 + Δf" following "$\beta_{mn}$" means that the "$\beta_{mn}$" represents a propagation constant resulting when frequency f = f0 + Δf, the expression "f = f0 - Δf" following "$\beta_{mn}$" means that the "$\beta_{mn}$" represents a propagation constant resulting when frequency f = f0 - Δf, and the expression "f = f0" following "$\beta_{mn}$" means that "$\beta_{mn}$" represents a propagation constant resulting when frequency f = f0.

$$\Delta\beta \;=\; \beta_{mn}\big|_{f=f0-\Delta f} \;+\; \beta_{01}\big|_{f=f0+\Delta f} \;-\; \beta_{01}\big|_{f=f0} \;-\; \beta_{mn}\big|_{f=f0} \;\ldots\;(3)$$

In a case where there is a value of Δf for which the propagation constant difference Δβ defined by the above equation (3) is zero, four-wave mixing occurs in which Stokes light of LP*mn* mode having a frequency f of f0-(Δf+Δμ) is amplified and anti-Stokes light of LP01 mode having a frequency f of f0+(Δf+Δμ) is generated. Note here that the above "Δμ" represents the value indicative of the amount by which frequency shifts depending on the power of laser light. The "Δf" that appears in the above equation (3) is called "frequency shift".

(a) of Fig. 7 is a chart showing the frequency shift Δf-dependence of the propagation constant difference Δβ calculated by the inventors with regard to a multi-mode fiber having a v-parameter of 6. (b) of Fig. 7 is a chart showing the frequency shift Δf-dependence of the propagation constant difference Δβ calculated by the inventors with regard to a multi-mode fiber having a v-parameter of 8. (c) of Fig. 7 is a chart showing the frequency shift Δf-dependence of the propagation constant difference Δβ calculated by the inventors with regard to a multi-mode fiber having a v-parameter of 10. As used herein, the "v-parameter" is quantity defined by the following equation (4), where a is a core diameter, no is the refractive index of the core, $n_1$ is the refractive index of a cladding, and $\lambda_0$ is the peak wavelength of laser light.

$$v \;=\; 2\pi a\,(n_1{}^2 - n_0{}^2)^{1/2} \;/\; \lambda_0 \;\ldots\;(4)$$

Fig. 7 confirms that, in multi-mode fibers having a v-parameter of 6, 8, or 10, four-wave mixing in which Stokes light of LP11 mode is amplified and anti-Stokes light of LPO1 mode is generated occurs. In this case, the frequency shift Δf is about 5 to 6 THz (equivalent to wavelength of about 15 to 20 nm). Fig. 7 also suggests that, in multi-mode fibers having a v-parameter of 6, 8, or 10, four-wave mixing in which Stokes light of a higher order guide mode (e.g., LP21 mode, LP02 mode, LP31 mode) is amplified and anti-Stokes light of LPO1 mode is generated can also occur. In this case, the frequency shift Δf is greater than 8 THz.

In the laser apparatus 1, laser light guided through the laser delivery fiber LDF, which is a multi-mode fiber, contains (a) laser light that is amplified by the amplifying optical fiber AF and then is guided through the laser delivery fiber LDF in a forward direction (the same direction as a direction in which the laser light goes out) and (b) laser light that is reflected at the workpiece W and then is guided through the laser delivery fiber LDF in a backward direction (opposite direction to the direction in which the laser light goes out). Stokes light and anti-Stokes light, resulting from four-wave mixing in which two guide modes contained in the laser light guided through the laser delivery fiber LDF in the forward direction are involved as pump light, are (1) guided through the laser delivery fiber LDF in the forward direction, (2) reflected at the workpiece W, and (3) guided through the laser delivery fiber LDF in the backward direction and then enter the amplifying optical fiber AF via the second fiber Bragg grating FBG2. On the contrary, Stokes light and anti-Stokes light, resulting from four-wave mixing in which two guide modes contained in the laser light guided through the laser delivery fiber LDF in the backward direction are involved as pump light, are guided through the laser delivery fiber LDF in the backward direction and then enter the amplifying optical fiber AF via the second fiber Bragg grating FBG2.

The Stokes light and the anti-Stokes light, after entering the amplifying optical fiber AF via the second fiber Bragg grating FBG2, may be amplified as they are guided through the amplifying optical fiber AF, in a case where the peak wavelength thereof or a wavelength near the peak wavelength is included in the amplification bandwidth of the amplifying optical fiber AF. Therefore, the Stokes light and anti-Stokes light guided through the amplifying optical fiber AF in the backward direction may increase in power. Such high-power Stokes light and anti-Stokes light guided through the amplifying optical fiber AF may make the oscillation of laser light unstable. Furthermore, if such high-power Stokes light and anti-Stokes light are outputted from the upstream end of the amplifying optical fiber AF and enter the pump light sources PS1 to PSm, the pump light sources PS1 to PSm may decrease in reliability.

As used herein, the term "multi-mode fiber" refers to an optical fiber with two or more guide modes. The number of guide modes of a multi-mode fiber depends on the design of the multi-mode fiber, and is, for example, ten. A "few-mode fiber", which is a fiber with two or more and ten or less guide modes, is an example of a multi-mode fiber. Furthermore, as used herein, the term "Stokes light" refers to Stokes light that is generated in a multi-mode fiber by four-wave mixing in which a plurality of guide modes are involved, unless otherwise specified, and the term "anti-Stokes light" refers to anti-Stokes light that is generated in a multi-mode fiber by four-wave mixing in which a plurality of guide modes are involved, unless otherwise specified.

(Function of detector)

The laser apparatus 1 in accordance with Embodiment 1 includes the detector D, which serves as a monitoring device for monitoring the power of at least one of Stokes light and anti-Stokes light resulting from, in a multi-mode fiber, four-wave mixing in which a plurality of guide modes are involved. The detector D is configured to detect light, belonging to a wavelength range that includes the peak wavelength of at least one of Stokes light and anti-Stokes light, in preference to light belonging to another wavelength range. Therefore, according to the laser apparatus 1 including the detector D or according to the monitoring device including the detector D, it is possible to monitor the power of at least one of Stokes light and anti-Stokes light with good accuracy. Note that the Stokes light and anti-Stokes light to be monitored may be (1) Stokes light and anti-Stokes light resulting from four-wave mixing in which a fundamental mode component and a higher order mode component of laser light guided through a multi-mode fiber are involved as pump light or (2) Stokes light and anti-Stokes light resulting from four-wave mixing in which a first higher order mode component and a second higher order mode component of laser light guided through a multi-mode fiber are involved as pump light. Note that, as used herein, the phrase "light belongs to a certain wavelength range" means that (1) in a case where the light is monochromatic light having a specific wavelength, at least that wavelength is included in the certain wavelength range or (2) in a case where the light is multichromatic light having a specific peak wavelength, at least that peak wavelength is included in the certain wavelength range.

The detector D included in the laser apparatus 1 in accordance with Embodiment 1 is connected to the input port of the pump combiner PC, and detects at least one of Stokes light and anti-Stokes light guided in a direction from the downstream end to the upstream end. As used herein, the term "downstream end" refers to one of the opposite ends of the laser apparatus 1 closer to the workpiece W, whereas the term "upstream end" refers to the other of the opposite ends of the laser apparatus 1 distant from the workpiece W. This makes it possible to monitor the power of at least one of Stokes light and anti-Stokes light before entering the pump light sources PS1 to PSm (forward excitation light sources) (i.e., Stokes light and anti-Stokes light having been guided through the pump combiner PC in the direction from the downstream end to the upstream end). Note that the input port of the pump combiner PC consists of (1) a first input port located at the center and optically coupled to the core of the amplifying optical fiber AF and (2) a second input port located around the first input port and optically coupled to a cladding of the amplifying optical fiber AF. It is preferable that the detector D is connected to the first input port.

It is preferable here that the detector D detects light, belonging to a wavelength range that includes the peak wavelength of at least one of Stokes light and anti-Stokes light, in preference to laser light oscillated by the laser apparatus 1 (hereinafter may be referred to as "laser light" for short). In other words, the foregoing "light belonging to another wavelength range" is preferably laser light. This makes it possible to prevent or reduce a reduction, which would be caused by detection of laser light (which is noise) by the detector, in accuracy of detection of at least one of Stokes light and anti-Stokes light.

It is preferable that, additionally or alternatively, the detector D detects light, belonging to a wavelength range that includes the peak wavelength of at least one of Stokes light and anti-Stokes light, in preference to scattered light generated by stimulated Raman scattering of laser light (hereinafter may be referred to as "stimulated Raman scattered light"). In other words, the foregoing "light belonging to another wavelength range" is preferably stimulated Raman scattered light. This makes it possible to prevent or reduce a reduction, which would be caused by detection of stimulated Raman scattered light (which is noise) by the detector, in accuracy of detection of at least one of Stokes light and anti-Stokes light.

It is preferable that, additionally or alternatively, the detector D detects light, belonging to a wavelength range that includes the peak wavelength of at least one of Stokes light and anti-Stokes light, in preference to spontaneous emission that occurs in the amplifying optical fiber AF (hereinafter may be referred to as "spontaneous emission" for short). In other words, the foregoing "light belonging to another wavelength range" is preferably spontaneous emission. This makes it possible to prevent or reduce a reduction, which would be caused by detection of spontaneous emission (which is noise) by the detector, in accuracy of detection of at least one of Stokes light and anti-Stokes light.

Note that the detector D may be configured to detect light, belonging to a wavelength range that includes the peak wavelength of at least one of Stokes light and anti-Stokes light, in preference to laser light and in preference to stimulated Raman scattered light. Alternatively, the detector D may be configured to detect light, belonging to a wavelength range that includes the peak wavelength of at least one of Stokes light and anti-Stokes light, in preference to laser light and in preference to spontaneous emission. Alternatively, the detector D may be configured to detect light, belonging to a wavelength range that includes the peak wavelength of at least one of Stokes light and anti-Stokes light, in preference to stimulated Raman scattered light and in preference to spontaneous emission. Alternatively, the detector D may be configured to detect light, belonging to a wavelength range that includes the peak wavelength of at least one of Stokes light and anti-Stokes light, in preference to laser light, in preference to stimulated Raman scattered light, and in preference to spontaneous emission.

Note that, in a case where Stokes light is to be detected, the range of wavelengths preferentially detected by the detector D is, for example, preferably a wavelength range which is loner in wavelength than the peak wavelength of laser light and in which the upper limit is a wavelength longer by 40 nm than the peak wavelength of the laser light, and is more preferably a wavelength range in which the lower limit is a wavelength longer by 10 nm than the peak wavelength of the laser light and the upper limit is a wavelength longer by 30 nm than the peak wavelength of the laser light. In this case, when, for example, the peak wavelength of the laser light is 1070 nm, the wavelength range of from 1080 nm to 1110 nm inclusive or the wavelength range of from 1080 nm to 1100 nm inclusive is the range of wavelengths preferentially detected by the detector D.

Note that examples of the oscillation wavelength of the laser apparatus 1 include not only 1070 nm but also $1070\pm3$ nm, 1030 nm, 1040 nm, 1050 nm, 1060 nm, 1080 mm, $1087\pm6$ nm, and 1090 nm. In a case where the peak wavelength of laser light is $1070\pm3$ nm, the wavelength range of from $1080\pm3$ nm to $1110\pm3$ nm inclusive or the wavelength range of from $1080\pm3$ nm to $1100\pm3$ nm inclusive is the range of wavelengths preferentially detected by the detector D. Alternatively, in a case where the peak wavelength of laser light is 1030 nm, the wavelength range of from 1040 nm to 1070 nm inclusive or the wavelength range of from 1040 nm to 1060 nm inclusive is the range of wavelengths preferentially detected by the detector D. Alternatively, in a case where the peak wavelength of laser light is 1040 nm, the wavelength range of from 1050 nm to 1080 nm inclusive or the wavelength range of from 1050 nm to 1070 nm inclusive is the range of wavelengths preferentially detected by the detector D. Alternatively, in a case where the peak wavelength of laser light is 1050 nm, the wavelength range of from 1060 nm to 1090 nm inclusive or the wavelength range of from 1060 nm to 1080 nm inclusive is the range of wavelengths preferentially detected by the detector D. Alternatively, in a case where the peak wavelength of laser light is 1060 nm, the wavelength range of from 1070 nm to 1100 nm inclusive or the wavelength range of from 1070 nm to 1090 nm inclusive is the range of wavelengths preferentially detected by the detector D. Alternatively, in a case where the peak wavelength of laser light is 1080 nm, the wavelength range of from 1090 nm to 1120 nm inclusive or the wavelength range of from 1090 nm to 1110 nm inclusive is the range of wavelengths preferentially detected by the detector D. Alternatively, in a case where the peak wavelength of laser light is $1087\pm6$ nm, the wavelength range of from $1097\pm6$ nm to $1127\pm6$ nm inclusive or the wavelength range of from $1097\pm6$ nm to $1117\pm6$ nm inclusive is the range of wavelengths preferentially detected by the detector D. Alternatively, in a case where the peak wavelength of laser light is 1090 nm, the wavelength range of from 1100 nm to 1130 nm inclusive or the wavelength range of from 1100 nm to 1120 nm inclusive is the range of wavelengths preferentially detected by the detector D.

On the contrary, in a case where anti-Stokes light is to be detected, the range of wavelengths preferentially detected by the detector D is, for example, preferably a wavelength range which is shorter in wavelength than the peak wavelength of laser light and in which the lower limit is a wavelength shorter by 40 nm than the peak wavelength of the laser light, and is more preferably a wavelength range in which the lower limit is a wavelength shorter by 30 nm than the peak wavelength of the laser light and the upper limit is a wavelength shorter by 10 nm than the peak wavelength of the laser light. In this case, when, for example, the peak wavelength of the laser light is 1070 nm, the wavelength range of from 1030 nm to 1060 nm inclusive or the wavelength range of from 1040 nm to 1060 nm inclusive is the range of wavelengths preferentially detected by the detector D.

Note that examples of the oscillation wavelength of the laser apparatus 1 include not only 1070 nm but also $1070 \pm 3$ nm, 1030 nm, 1040 nm, 1050 nm, 1060 nm, 1080 mm, $1087 \pm 6$ nm, and 1090 nm. In a case where the peak wavelength of laser light is $1070 \pm 3$ nm, the wavelength range of from $1030 \pm 3$ nm to $1060 \pm 3$ nm inclusive or the wavelength range of from $1040 \pm 3$ nm to $1060 \pm 3$ nm inclusive is the range of wavelengths preferentially detected by the detector D. Alternatively, in a case where the peak wavelength of laser light is 1030 nm, the wavelength range of from 990 nm to 1020 nm inclusive or the wavelength range of from 1000 nm to 1020 nm inclusive is the range of wavelengths preferentially detected by the detector D. Alternatively, in a case where the peak wavelength of laser light is 1040 nm, the wavelength range of from 1000 nm to 1030 nm inclusive or the wavelength range of from 1010 nm to 1030 nm inclusive is the range of wavelengths preferentially detected by the detector D. Alternatively, in a case where the peak wavelength of laser light is 1050 nm, the wavelength range of from 1010 nm to 1040 nm inclusive or the wavelength range of from 1020 nm to 1040 nm inclusive is the range of wavelengths preferentially detected by the detector D. Alternatively, in a case where the peak wavelength of laser light is 1060 nm, the wavelength range of from 1020 nm to 1050 nm inclusive or the wavelength range of from 1030 nm to 1050 nm inclusive is the range of wavelengths preferentially detected by the detector D. Alternatively, in a case where the peak wavelength of laser light is 1080 nm, the wavelength range of from 1040 nm to 1070 nm inclusive or the wavelength range of from 1050 nm to 1070 nm inclusive is the range of wavelengths preferentially detected by the detector D. Alternatively, in a case where the peak wavelength of laser light is $1087 \pm 6$ nm, the wavelength range of from $1047 \pm 6$ nm to $1077 \pm 6$ nm inclusive or the wavelength range of from $1057 \pm 6$ nm to $1077 \pm 6$ nm inclusive is the range of wavelengths preferentially detected by the detector D. Alternatively, in a case where the peak wavelength of laser light is 1090 nm, the wavelength range of from 1050 nm to 1080 nm inclusive or the wavelength range of from 1060 nm to 1080 nm inclusive is the range of wavelengths preferentially detected by the detector D.

Note that the relationship "peak wavelength of anti-Stokes light < peak wavelength of laser light < peak wavelength of Stokes light" holds among the peak wavelengths of laser light, Stokes light, and anti-Stokes light, and that the relationship "peak wavelength of laser light < peak wavelength of stimulated Raman scattered light" holds between the peak wavelengths of laser light and stimulated Raman scattered light. Therefore, by employing an arrangement in which the detector D is configured to preferentially detect only light belonging to a wavelength range including the peak wavelength of anti-Stokes light and being shorter in wavelength than the peak wavelength of laser light (such an arrangement is hereinafter referred to as First Arrangement), it is possible to detect the power of anti-Stokes light with good accuracy (i.e., it is possible to prevent or reduce the detection of laser light, stimulated Raman scattered light, and Stokes light). Alternatively, in a case where the relationship "peak wavelength of Stokes light < peak wavelength of stimulated Raman scattered light" holds between the peak wavelengths of Stokes light and stimulated Raman scattered light, by employing an arrangement in which the detector D is configured to preferentially detect only light belonging to a wavelength range including the peak wavelength of Stokes light and being longer in wavelength than the peak wavelength of laser light and shorter in wavelength than the peak wavelength of stimulated Raman scattered light (such an arrangement is hereinafter referred to as Second Arrangement), it is possible to detect the power of Stokes light with good accuracy (i.e., it is possible to prevent or reduce the detection of laser light, stimulated Raman scattered light, anti-Stokes light). On the contrary, in a case where the relationship "peak wavelength of Stokes light > peak wavelength of stimulated Raman scattered light" holds between the peak wavelengths of Stokes light and stimulated Raman scattered light, by employing an arrangement in which the detector D is configured to preferentially detect only light belonging to a wavelength range including the peak wavelength of Stokes light and being longer in wavelength than the peak wavelength of stimulated Raman scattered light, it is possible to detect the power of Stokes light with good accuracy (i.e., it is possible to prevent or reduce the detection of laser light, stimulated Raman scattered light, anti-Stokes light).

Note here that, in a case where the peak wavelength of Stokes light is included in the wavelength range within which stimulated Raman scattering is amplified, the peak power of Stokes light may become greater than the peak power of anti-Stokes light. If this is the case, employing Second Arrangement and detecting only the power of Stokes light makes it possible to increase S/N ratio to a greater extent than when employing First Arrangement and detecting only the power of anti-Stokes light. This also makes it possible to easily sense a four-wave mixing phenomenon. On the contrary, in a case where the peak of Stokes light is not included in the wavelength range within which stimulated Raman scattering is amplified, the peak power of anti-Stokes light may become greater than the peak power of Stokes light. If this is the case, employing the arrangement described in the former half of the previous paragraph and detecting only the power of anti-Stokes light makes it possible to increase the S/N ratio to a greater extent than when employing the arrangement described in the latter half of the previous paragraph and detecting only the power of Stokes light. This also makes it possible to easily sense a four-wave mixing phenomenon.

It is also preferable that the range of wavelengths preferentially detected by the detector D includes both (i) a first wavelength range that includes the peak wavelength of Stokes light and (ii) a second wavelength range that includes the peak wavelength of anti-Stokes light and that does not overlap the first wavelength range. This makes it possible to detect the powers of both the Stokes light and anti-Stokes light.

It is also preferable that the detector D is configured to preferentially detect light which belongs to a wavelength range including the peak wavelength of at least one of Stokes light and anti-Stokes light and which is greater in power than spontaneous emission. This makes it possible to prevent or reduce a reduction, which would be caused by the detection of spontaneous emission (which is noise) by the detector, in accuracy of detection of at least one of Stokes light and anti-Stokes light.

The phase matching condition, which determines the peak wavelengths of Stokes light and anti-Stokes light, contains a term that depends on the power of laser light. The peak wavelengths of Stokes light and anti-Stokes light therefore vary depending on the power of laser light. Therefore, the range of wavelengths preferentially detected by the detector D is preferably changed in accordance with the power of laser light so that the range includes the peak wavelength of at least one of Stokes light and anti-Stokes light. This makes it possible to measure the power of at least one of Stokes light and anti-Stokes light with good accuracy even in a case where the peak wavelength of at least one of Stokes light and anti-Stokes light changes with changes in power of laser light.

Note that the detector D as has been described can be realized by a photoelectric converter (e.g., photodiode) that converts light to electric current or voltage or by a combination of a photothermal converter that converts light to heat and a thermal detector that converts heat to electric current or voltage. Examples of a method of preferentially detecting light belonging to a specific wavelength range using any of those listed above include: a method involving using a photoelectric converter or photothermal converter that is more sensitive in that specific wavelength range than in another wavelength range; and a method involving placing, at a position upstream of the photoelectric converter or photothermal converter, a wavelength filter that preferentially allows passage of light belonging to that specific wavelength range. Alternatively, the following arrangement also makes it possible to preferentially detect light belonging to a specific wavelength range: a prism is provided at a position upstream of the photoelectric converter or photothermal converter; and the photoelectric converter or photothermal converter is located so that a portion, of light split by the prism, which belongs to that specific wavelength range is incident on the photoelectric converter or photothermal converter. Alternatively, the following arrangement also makes it possible to preferentially detect light belonging to a specific wavelength range: a converting section (e.g., microcomputer), which increases the sensitivity in the specific wavelength range and which reduces the sensitivity in another wavelength range, is provided at a position downstream of the photoelectric converter. Alternatively or additionally, in a case where the power of light entering the photoelectric converter or photothermal converter is high and the photoelectric converter or photothermal converter may undergo some trouble, a feature that attenuates the power of light may be provided at a position upstream of the photoelectric converter or photothermal converter.

The laser apparatus 1 may further include a reducing section (not illustrated) which reduces stimulated Raman scattered light. The extent to which the stimulated Raman scattered light is reduced by the reducing section is not particularly limited. It is preferable that the power of stimulated Raman scattered light is less than -30 dB relative to the power of laser light or that the peak power of stimulated Raman scattered light is less than the peak power of at least one of Stokes light and anti-Stokes light resulting from four-wave mixing. With this, the peak of at least one of Stokes light and anti-Stokes light resulting from four-wave mixing is less likely to be masked by the peak of stimulated Raman scattered light on the spectrum of outgoing light, and, as a result, it is possible to prevent or reduce a reduction in S/N ratio that would be caused by stimulated Raman scattered light entering the detector D. This also makes it possible to more easily sense a four-wave mixing phenomenon. Examples of a method of reducing stimulated Raman scattered light include: a method by which the generation of stimulated Raman scattered light is reduced; and a method by which a loss of generated stimulated Raman scattered light is caused. Specific examples of the method by which the generation of stimulated Raman scattered light is reduced include: a method by which effective area $A_{eff}$ of the core is increased; and a method by which core $\Delta$ (i.e., relative refractive index difference between core and cladding) is reduced. In such cases, an optical fiber, in which the generation of stimulated Raman scattered light is reduced by any of such methods, serves as the foregoing reducing section. Examples of the method by which a loss of generated stimulated Raman scattered light is caused include: a method by which stimulated Raman scattered light is coupled to a radiation mode with use of a slanted fiber Bragg grating or photonic bandgap fiber; and a method by which stimulated Raman scattered light is reflected with use of a fiber Bragg grating. In such cases, a slanted fiber Bragg grating, photonic bandgap fiber, fiber Bragg grating, or the like used in realizing any of such methods serves as the foregoing reducing section. In a case where a slanted fiber Bragg grating or a photonic bandgap fiber is used as the reducing section, an arrangement in which the laser delivery fiber LDF includes the reducing section may be employed, for example.

Note that, according to the chart shown in Fig. 6, Stokes light and anti-Stokes light that affect the spectral shape of outgoing light are generated in a case where the power of laser light oscillated by the laser apparatus 1 is 3 kW or greater or in a case where the power of outgoing light (including Stokes light and anti-Stokes light) outputted from the laser apparatus 1 is 4 kW or greater. Therefore, in the case where the power of laser light oscillated by the laser apparatus 1 is 3 kW or greater or in the case where the power of outgoing light outputted from the laser apparatus 1 is 4 kW or greater, the detector D functions especially effectively.

(Function of control section)

The laser apparatus 1 in accordance with Embodiment 1 includes the control section C, which is a control device to control the laser apparatus 1. The control section C is configured to control the laser apparatus 1 based on the power of light (at least one of Stokes light and anti-Stokes light) detected by the detector D. Therefore, the control section C makes it possible to control the laser apparatus 1 in accordance with the power of at least one of Stokes light and anti-Stokes light. The following description will discuss a function of the control section C based on an example in which driving current supplied to the pump light sources PS1 to PSm is controlled in accordance with the power of at least one of Stokes light and anti-Stokes light.

The control section C includes a storage section C1, an arithmetic-logic section C2, and a light source control section C3. The storage section C1 is a feature to store a threshold Pth predetermined by a user or a manufacturer of the laser apparatus 1. The arithmetic-logic section C2 is a feature to compare power P of light detected by the detector D and the threshold Pth stored in the storage section. The light source control section C3 is a feature to control, based on the result of the comparison obtained at the arithmetic-logic section C2, driving current supplied to the pump light sources PS1 to PSm.

For example, in a case where the result of the comparison obtained at the arithmetic-logic section C2 is P > Pth, the light source control section C3 carries out control so that driving current stops being supplied to the pump light sources PS1 to PSm. Such a control carried out by the light source control section C3 is hereinafter referred to as "First Control". With this arrangement, (1) pump light stops being supplied to the amplifying optical fiber AF, (2) this results in stoppage of the amplification of laser light in the amplifying optical fiber AF, (3) this results in stoppage of the supply of laser light to the laser delivery fiber LDF (which is a multi-mode fiber), and (4) this results in stoppage of the amplification or generation of Stokes light and anti-Stokes light resulting from, in the laser delivery fiber LDF, four-wave mixing in which two guide modes of laser light are involved as pump light. This makes it possible to reduce the likelihood that Stokes light and anti-Stokes light will make the oscillation of laser light unstable or reduce the likelihood that Stokes light and anti-Stokes light will reduce the reliability of the pump light sources PS1 and PSm.

Alternatively, in a case where the result of the comparison obtained at the arithmetic-logic section C2 is P > Pth, the light source control section C3 carries out control so that driving current supplied to the pump light sources PS1 to PSm decreases. Such a control carried out by the light source control section C3 is hereinafter referred to as "Second Control". With this arrangement, (1) the power of pump light supplied to the amplifying optical fiber AF decreases, (2) this results in reduction of the amplification of laser light in the amplifying optical fiber AF, (3) this results in a reduction of the power of laser light supplied to the laser delivery fiber LDF (which is a multi-mode fiber), and (4) this results in a reduction of the power of Stokes light and anti-Stokes light resulting from, in the laser delivery fiber LDF, four-wave mixing in which two guide modes of laser light are involved as pump light. This makes it possible to reduce the likelihood that Stokes light and anti-Stokes light will make the oscillation of laser light unstable or reduce the likelihood that Stokes light and anti-Stokes light will reduce the reliability of the pump light sources PS1 to PSm.

Note that the control section C preferably carries out the following "Third Control" when the power P of light detected by the detector D has become less than the predetermined threshold Pth after the foregoing First Control or Second Control is carried out. Specifically, it is preferable that, when the power P of light detected by the detector D has become less than a predetermined threshold Pth' (Pth' < Pth), the control section C carries out control so that the supply of driving current to the pump light sources PS1 to PSm resumes. Alternatively, it is preferable that, when the power P of light detected by the detector D has become less than a predetermined threshold Pth' (Pth' < Pth), the control section C carries out control so that the driving current supplied to the pump light sources PS1 to PSm increases. This makes it possible for the laser apparatus 1 to recover its original state at the right time after the control to stop or reduce the driving current supplied to the pump light sources PS1 to PSm is carried out.

The control section C preferably carries out the following "Fourth Control" instead of or in addition to the foregoing First Control or Second Control when the power P of light detected by the detector D is greater than the predetermined threshold Pth. Specifically, it is preferable that, when the power P of light detected by the detector D is greater than the predetermined threshold Pth, the control section C carries out control to change the orientation of the laser head LH so that the angle of incidence of laser light incident on the workpiece W increases. When the angle of incidence of laser light incident on the workpiece W increases, laser light reflected at the workpiece W becomes less likely to go back into the laser delivery fiber LDF. This makes it possible to reduce the likelihood that Stokes light and anti-Stokes light will make the oscillation of laser light unstable or reduce the likelihood that Stokes light and anti-Stokes light will reduce the reliability of the pump light sources PS1 to PSm, similarly to the cases where the control to stop or reduce the driving current supplied to the pump light sources PS1 to PSm is carried out.

The control section C preferably carries out the following "Fifth Control" instead of or in addition to the foregoing First Control or Second Control when the power P of light detected by the detector D is greater than the predetermined threshold Pth. Specifically, it is preferable that, when the power P of light detected by the detector D is greater than the predetermined threshold Pth, the control section C carries out control so that a user is notified that the power of at least one of Stokes light and anti-Stokes light is too large. Examples of such control include: control by which a speaker is controlled to give a sound alert to the user; control by which a lamp is controlled to give a light alert to the user; and control by which a display is controlled to present an alert window to the user. This makes it possible for the user to, for example, manually stop the laser apparatus 1 or manually change the orientation of the workpiece W so that the angle of incidence of laser light incident on the workpiece W increases. This makes it possible to reduce the likelihood that Stokes light and anti-Stokes light will make the oscillation of laser light unstable or reduce the likelihood that Stokes light and anti-Stokes light will reduce the reliability of the pump light sources PS1 to PSm.

Alternatively, the control section C preferably carries out the foregoing Second Control when a difference P-PO between the power P of light detected by the detector D and a normal value P0 is greater than a predetermined threshold Pth" instead of when the power P of light detected by the detector D is greater than the predetermined threshold Pth. In a case where the control section C carries out the foregoing Second Control when the difference P-PO is greater than the predetermined threshold Pth", it is preferable that the control section C carries out this Second Control so that the difference P-PO becomes closer to zero. In this case, the power of light detected by the detector D when laser light is being applied normally to the workpiece W perpendicularly to the workpiece W is pre-stored as the normal value PO in the storage section C1. This makes it possible to carry out the foregoing control under a condition suitable for the workpiece W being machined.

The control section C is preferably configured to determine that a portion, which has a greater power than a threshold, of light detected by the detector D is at least one of Stokes light and anti-Stokes light. The threshold here is a power 40 dB lower than the power of laser light. This makes it possible to prevent or reduce a reduction, which would be caused by the detection of spontaneous emission (which is noise) by the detector D, in accuracy of detection of at least one of Stokes light and anti-Stokes light, when the power of spontaneous emission is less than the threshold and the power of Stokes light and anti-Stokes light resulting from four-wave mixing is greater than the threshold. Note that the chart of Fig. 6 confirms that the power of Stokes light and anti-Stokes light resulting from four-wave mixing is actually greater than this threshold (i.e., power 40 dB lower than the power of laser light).

In a case where the detector D is configured to detect the powers of both Stokes light and anti-Stokes light, the control section C is preferably configured to compare the peak power of Stokes light detected by the detector D and the peak power of anti-Stokes light detected by the detector D and control the laser apparatus 1 based on greater one of the peak powers. This makes it possible to control the laser apparatus 1 based on one, which is detected with a higher S/N ratio, of the powers of Stokes light and anti-Stokes light. This makes it possible to improve the accuracy of control based on the power of Stokes light or anti-Stokes light.

[Embodiment 2]

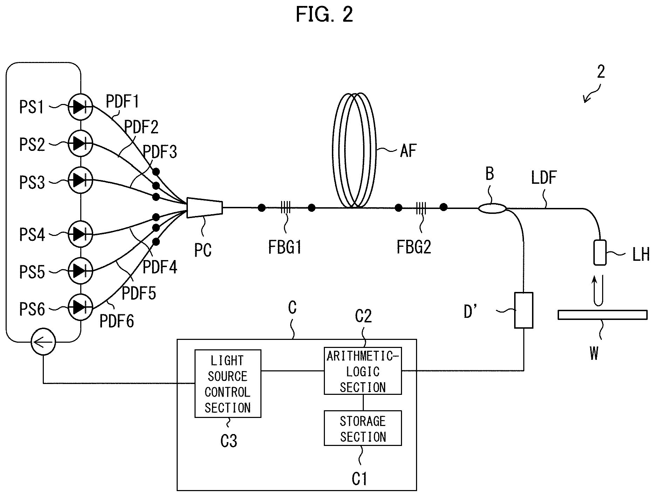

The following description will discuss a laser apparatus 2 in accordance with Embodiment 2 of the present invention, with reference to Fig. 2. Fig. 2 is a block diagram illustrating a configuration of the laser apparatus 2.

The laser apparatus 2 is a fiber laser apparatus for machining, and causes oscillation of single wavelength laser light. As illustrated in Fig. 2, the laser apparatus 2 includes m pump light sources PS1 to PSm, m pump delivery fibers PDF1 to PDFm, a pump combiner PC, an amplifying optical fiber AF, two fiber Bragg gratings FBG1 and FBG2, a laser delivery fiber LDF, a laser head LH, a detector D' as a monitoring device, and a control section C as a control device.

The functions and arrangement of the pump light sources PS1 to PSm, the pump delivery fibers PDF1 to PDFm, the pump combiner PC, the amplifying optical fiber AF, the fiber Bragg gratings FBG1 and FBG2, the laser delivery fiber LDF, the laser head LH, and the control section C included in the laser apparatus 2 in accordance with Embodiment 2 are the same as the functions and arrangement of the pump light sources PS1 to PSm, the pump delivery fibers PDF1 to PDFm, the pump combiner PC, the amplifying optical fiber AF, the fiber Bragg gratings FBG1 and FBG2, the laser delivery fiber LDF, the laser head LH, and the control section C included in the laser apparatus 1 in accordance with Embodiment 1, respectively. Therefore, descriptions for these features are omitted here.

The detector D' included in the laser apparatus 2 in accordance with Embodiment 2 is configured in a similar manner to the detector D included in the laser apparatus 1 in accordance with Embodiment 1. Note, however, that the detector D' included in the laser apparatus 2 in accordance with Embodiment 2 is connected to an optical divider B inserted in the laser delivery fiber LDF, and detects Stokes light and anti-Stokes light guided in a direction from the upstream end to the downstream end. As used herein, the term "downstream end" refers to one of the opposite ends of the laser apparatus 2 closer to the workpiece W, whereas the term "upstream end" refers to the other of the opposite ends of the laser apparatus 2 distant from the workpiece W. With this arrangement, according to the laser apparatus 2 including the detector D' or according to a monitoring device including the detector D', it is possible to monitor the power of at least one of Stokes light and anti-Stokes light before outputted from the laser apparatus 2 together with laser light (i.e., Stokes light and anti-Stokes light guided through the laser delivery fiber LDF in the direction from the upstream end to the downstream end). Also, the detector D' is capable of sensing, in an early stage, that four-wave mixing has occurred in a portion, of the laser delivery fiber LDF, extending from the second fiber Bragg grating FBG2 to the optical divider B. Furthermore, the control section C is capable of starting, in an early stage, control based on at least one of Stokes light and anti-Stokes light resulting from the four-wave mixing that has occurred in that portion. This makes it possible to easily prevent or reduce the entrance of at least one of Stokes light and anti-Stokes light into the pump light sources PS1 to PSm, resulting in an improvement in reliability of the pump light sources PS1 to PSm. Note that the "portion, of the laser delivery fiber LDF, extending from the second fiber Bragg grating FBG2 to the optical divider B" is a portion where four-wave mixing may be relatively highly likely to occur.

Note that the location of the detector D' for detecting Stokes light and anti-Stokes light guided through the amplifying optical fiber AF in the direction from the upstream end to the downstream end is not limited to the location illustrated in Fig. 2. For example, the detector D' located so as to detect Rayleigh scattered light leaked out through the side surface of the laser delivery fiber LDF also makes it possible to detect Stokes light and anti-Stokes light guided through the amplifying optical fiber AF in the direction from the upstream end to the downstream end. In a case where the detector D' is located so as to detect Rayleigh scattered light leaked out through the side surface of the laser delivery fiber LDF, the optical divider B illustrated in Fig. 2 is not necessary. This prevents a loss of laser light that would otherwise occur at the optical divider B, and thus makes it possible to further increase the power of outgoing laser light and to improve safety of the laser apparatus 2.

[Embodiment 3]

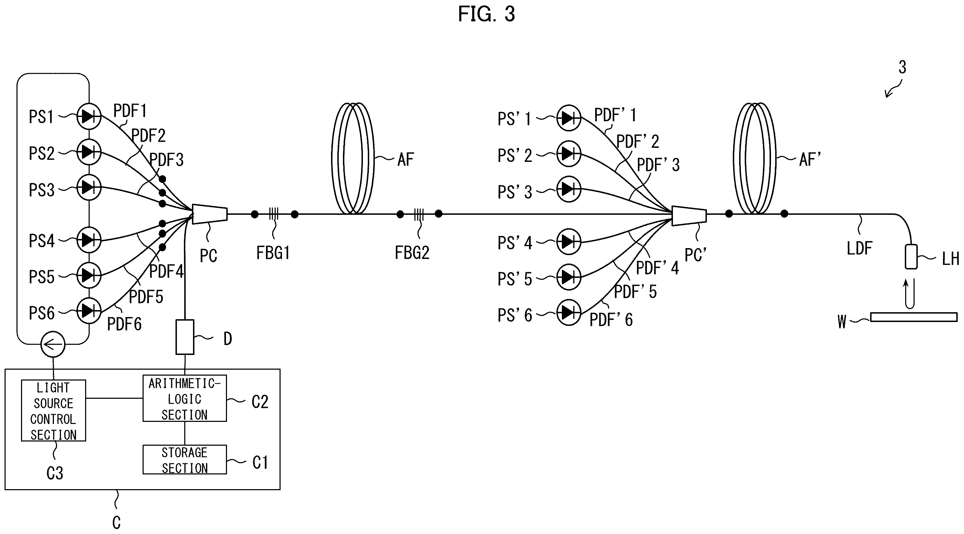

The following description will discuss a laser apparatus 3 in accordance with Embodiment 3 of the present invention, with reference to Fig. 3. Fig. 3 is a block diagram illustrating a configuration of the laser apparatus 3.

The laser apparatus 3 is a fiber laser apparatus for machining, and causes oscillation of single wavelength laser light. As illustrated in Fig. 3, the laser apparatus 3 includes m pump light sources PS1 to PSm, m pump delivery fibers PDF1 to PDFm, a pump combiner PC, an amplifying optical fiber AF, two fiber Bragg gratings FBG1 and FBG2, $k$ pump light sources PS'1 to PS'$k$, $k$ pump delivery fibers PDF'1 to PDF'$k$, a pump combiner PC', an amplifying optical fiber AF', a laser delivery fiber LDF, a laser head LH, a detector D as a monitoring device, and a control section C as a control device.

The pump light sources PS1 to PS$m$, the pump delivery fibers PDF1 to PDF$m$, the pump combiner PC, the amplifying optical fiber AF, the fiber Bragg gratings FBG1 and FBG2, the laser delivery fiber LDF, the laser head LH, the detector D, and the control section C included in the laser apparatus 3 in accordance with Embodiment 3 have the same configurations as the pump light sources PS1 to PSm, the pump delivery fibers PDF1 to PDF$m$, the pump combiner PC, the amplifying optical fiber AF, the fiber Bragg gratings FBG1 and FBG2, the laser delivery fiber LDF, the laser head LH, the detector D, and the control section C included in the laser apparatus 1 in accordance with Embodiment 1, respectively.

The following description will discuss the pump light sources PS'1 to PS'$k$, the pump delivery fibers PDF'1 to PDF'$k$, the pump combiner PC', and the amplifying optical fiber AF', which are provided between the second fiber Bragg grating FBG2 and the laser delivery fiber LDF. Note that the pump light sources PS'1 to PS'$k$ and the pump delivery fibers PDF'1 to PDF'$k$ are in one-to-one correspondence with each other. Note here that $k$ is a natural number of 2 or more, and represents the number of the pump light sources PS'1 to PS'$k$ and the number of the pump delivery fibers PDF'1 to PDF'$k$. Fig. 3 shows an example of a configuration of the laser apparatus 3 in a case where $k = 6$.

Each of the pump light sources PS'j (j is a natural number of 1 or more and $k$ or less) emits pump light. The pump light can be, for example, laser light having a peak wavelength of $975\pm3$ nm or $915\pm3$ nm. In Embodiment 3, the pump light sources PS'1 to PS'$k$ are laser diodes. Each of the pump light sources PS'j is connected to an input end of a corresponding pump delivery fiber PDF'$j$. The pump light emitted by the pump light sources PS'j is introduced into respective corresponding pump delivery fibers PDF'$i$.

The pump delivery fibers PDF'$j$ guide the pump light emitted by the corresponding pump light sources PS'j. Output ends of the pump delivery fibers PDF'$j$ are connected to an input port of the pump combiner PC'. The pump light guided through the pump delivery fibers PDF'$j$ is introduced into the pump combiner PC' via the input port.

The pump combiner PC' combines pump light guided through the pump delivery fibers PDF'1 to PDF'$k$. An output port of the pump combiner PC' is connected to an input end of the amplifying optical fiber AF'. The pump light combined at the pump combiner PC' is introduced into the amplifying optical fiber AF'.

The amplifying optical fiber AF' uses the pump light that has been combined at the pump combiner PC' to thereby amplify laser light belonging to a specific wavelength range (hereinafter referred to as "amplification bandwidth"). In Embodiment 3, the amplifying optical fiber AF is a double-clad fiber having a core doped with a rare-earth element (such as ytterbium, thulium, cerium, neodymium, europium, erbium, and/or the like). In this case, the pump light combined at the pump combiner PC' is used to keep the rare-earth element in population inversion state. For example, in a case where the rare-earth element contained in the core is ytterbium, the amplification bandwidth of the amplifying optical fiber AF' is, for example, the wavelength range of from 1000 nm to 1100 nm inclusive. Note, here, that the peak wavelength of laser light in the claims is, for example, equal to or substantially equal to the peak wavelength of laser light outputted from an MO section (described later), in a multi-mode fiber that is present inside the MO section. Alternatively, in a case where a wavelength conversion element is provided downstream of the MO section, the peak wavelength of laser light in the claims in a multi-mode fiber located upstream of the wavelength conversion element is equal to or substantially equal to the peak wavelength of laser light outputted from the MO section, and the peak wavelength of laser light in the claims in a multi-mode fiber located downstream of the wavelength conversion element is equal to or substantially equal to the peak wavelength of laser light obtained through conversion, by the wavelength conversion element, of the laser light outputted from the MO section. In a case where no wavelength conversion element is present downstream of the MO section, the peak wavelength of laser light in the claims in a multi-mode fiber located downstream of the MO section is equal to or substantially equal to the peak wavelength of laser light outputted from the MO section.

The laser apparatus 3 thus configured functions as a MOPA-type fiber laser in which (i) the pump light sources PS1 to PSm, the pump delivery fibers PDF1 to PDFm, the pump combiner PC, the amplifying optical fiber AF, and the fiber Bragg gratings FBG1 and FBG2 serve as the MO (master oscillator) section and (ii) the pump light sources PS'1 to PS'$k$, the pump delivery fibers PDF'1 to PDF'$k$, the pump combiner PC', and the amplifying optical fiber AF' serve as a power amplifier (PA) section. The peak wavelength of laser light that is guided through the laser delivery fiber LDF and applied to a workpiece W via the laser head LH is, for example, in a case where no wavelength conversion element is provided downstream of the MO section, equal to or substantially equal to the oscillation wavelength of the MO section. Alternatively, in a case where a wavelength conversion element is provided downstream of the MO section, the peak wavelength of the laser light is equal to the peak wavelength of laser light obtained through conversion, by the wavelength conversion element, of laser light outputted from the MO section.

In the laser apparatus 3 in accordance with Embodiment 3, laser light amplified at the amplifying optical fiber AF' is guided through the laser delivery fiber LDF which is a multi-mode fiber. Furthermore, in the laser apparatus 3 in accordance with Embodiment 3, laser light reflected at the workpiece W is guided through the laser delivery fiber LDF which is a multi-mode fiber. In this process, Stokes light is amplified and anti-Stokes light is generated in the laser delivery fiber LDF by four-wave mixing in which a plurality of guide modes are involved. Note that the amplifying optical fiber AF' can also be a multi-mode fiber. In this case, also in the amplifying optical fiber AF', Stokes light can be amplified and anti-Stokes light can be generated by four-wave mixing in which a plurality of guide modes are involved.

The detector D of the laser apparatus 3 in accordance with Embodiment 3 is, similarly to the detector D of the laser apparatus 1 in accordance with Embodiment 1, configured to detect light belonging to a wavelength range that includes at least one of Stokes light and anti-Stokes light in preference to light belonging to another wavelength range. Therefore, according to the laser apparatus 3 including the detector D or according to a monitoring device including the detector D, it is possible to monitor the power of at least one of Stokes light and anti-Stokes light with good accuracy.

Furthermore, the detector D of the laser apparatus 3 in accordance with Embodiment 3 is, similarly to the detector D of the laser apparatus 1 in accordance with Embodiment 1, connected to the input port of the pump combiner PC and configured to detect at least one of Stokes light and anti-Stokes light guided through the amplifying optical fiber AF in the direction from the downstream end to the upstream end. Therefore, according to the laser apparatus 3 including the detector D or according to a monitoring device including the detector D, it is possible to monitor the power of at least one of Stokes light and anti-Stokes light entering the pump light sources PS1 to PSm.

Note that preferred arrangements discussed in Embodiment 1 can be employed also in the laser apparatus 3 in accordance with Embodiment 3. In a case where a preferred arrangement discussed in Embodiment 1 is employed in the laser apparatus 3 in accordance with Embodiment 3, effects corresponding to that preferred arrangement discussed in Embodiment 1 are obtained also in the laser apparatus 3 in accordance with Embodiment 3.

Embodiment 3 discussed an arrangement in which the control section C controls driving current supplied to the pump light sources PS1 to PS$m$ of the MO section; however, this does not imply any limitation. Specifically, the control section C may be configured to control driving current supplied to the pump light sources PS'1 to PS'$k$ of the PA section instead of or in addition to controlling the driving current supplied to the pump light sources PS1 to PSm of the MO section.

[Embodiment 4]

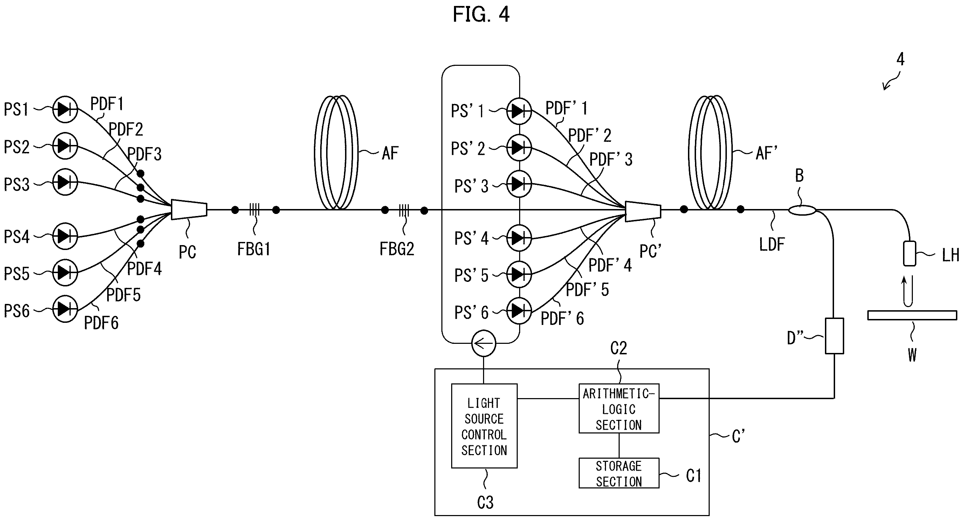

The following description will discuss a laser apparatus 4 in accordance with Embodiment 4 of the present invention, with reference to Fig. 4. Fig. 4 is a block diagram illustrating a configuration of the laser apparatus 4.

The laser apparatus 4 in accordance with Embodiment 4 is different from the laser apparatus 3 in accordance with Embodiment 3 in the following points.

Point of difference 1: The detector D, which is connected to the input port of the pump combiner PC and which detects at least one of Stokes light and anti-Stokes light guided in the direction from the downstream end to the upstream end, of the laser apparatus 3 in accordance with Embodiment 3 is replaced by a detector D" that is connected to an optical divider B inserted in the laser delivery fiber LDF and that detects at least one of Stokes light and anti-Stokes light guided in the direction from the upstream end to the downstream end.

Point of difference 2: the control section C, which controls driving current supplied to the pump light sources PS1 to PSm of the MO section, of the laser apparatus 3 in accordance with Embodiment 3 is replaced by a control section C' that controls driving current supplied to the pump light sources PS'1 to PS'$k$ of the PA section. Note, however, that the control section C' of the laser apparatus 4 in accordance with Embodiment 4 carries out the control concerning the driving current for the pump light sources PS'1 to PS'$k$ of the PA section based on the power of light detected by the detector D", in the same manner as the control carried out by the control section C of the laser apparatus 3 in accordance with Embodiment 3 concerning the driving current for the pump light sources PS1 to PSm of the MO section based on the power of light detected by the detector D.

The detector D" of the laser apparatus 4 in accordance with Embodiment 4 is, similarly to the detector D of the laser apparatus 3 in accordance with Embodiment 3, configured to detect light belonging to a wavelength range that includes at least one of Stokes light and anti-Stokes light in preference to light belonging to another wavelength range. Therefore, according to the laser apparatus 4 including the detector D" or according to a monitoring device including the detector D", it is possible to monitor the power of at least one of Stokes light and anti-Stokes light with good accuracy.

Furthermore, the detector D" of the laser apparatus 4 in accordance with Embodiment 4 is, differently from the detector D of the laser apparatus 3 in accordance with Embodiment 3, connected to the optical divider B inserted in the laser delivery fiber LDF and configured to detect at least one of Stokes light and anti-Stokes light guided in the direction from the upstream end to the downstream end. Therefore, according to the laser apparatus 4 in accordance with Embodiment 4, it is possible to monitor the power of at least one of Stokes light and anti-Stokes light before outputted from the laser apparatus 4 together with laser light (i.e., Stokes light and anti-Stokes light guided through the laser delivery fiber LDF in the direction from the upstream end to the downstream end). It is also possible to sense, in an early stage, that four-wave mixing has occurred in a portion, of the laser delivery fiber LDF, extending from the downstream end of the amplifying optical fiber AF to the optical divider B. Furthermore, the control section C' is capable of starting, in an early stage, control based on at least one of Stokes light and anti-Stokes light.

Note that preferred arrangements discussed in Embodiment 1 can be employed also in the laser apparatus 4 in accordance with Embodiment 4. In a case where a preferred arrangement discussed in Embodiment 1 is employed in the laser apparatus 4 in accordance with Embodiment 4, effects corresponding to that preferred arrangement discussed in Embodiment 1 are obtained also in the laser apparatus 4 in accordance with Embodiment 4.

Embodiment 4 discussed an arrangement in which the control section C' controls driving current supplied to the pump light sources PS'1 to PS'$k$ of the PA section; however, this does not imply any limitation. Specifically, the control section C' may be configured to control driving current supplied to the pump light sources PS1 to PSm of the MO section instead of or in addition to controlling the driving current supplied to the pump light sources PS'1 to PS'$k$ of the PA section.

Note that the location of the detector D" for detecting Stokes light and anti-Stokes light guided through the amplifying optical fiber AF' in the direction from the upstream end to the downstream end is not limited to the location illustrated in Fig. 4. For example, the detector D" located so as to detect Rayleigh scattered light leaked out through the side surface of the laser delivery fiber LDF also makes it possible to detect Stokes light and anti-Stokes light guided through the amplifying optical fiber AF' in the direction from the upstream end to the downstream end, as described earlier in Embodiment 2. In a case where the detector D" is located so as to detect Rayleigh scattered light leaked out through the side surface of the laser delivery fiber LDF, the optical divider B illustrated in Fig. 4 is not necessary. This prevents a loss of laser light that would otherwise occur at the optical divider B, and thus makes it possible to further increase the power of outgoing laser light and to improve safety of the laser apparatus 4.

[Embodiment 5]

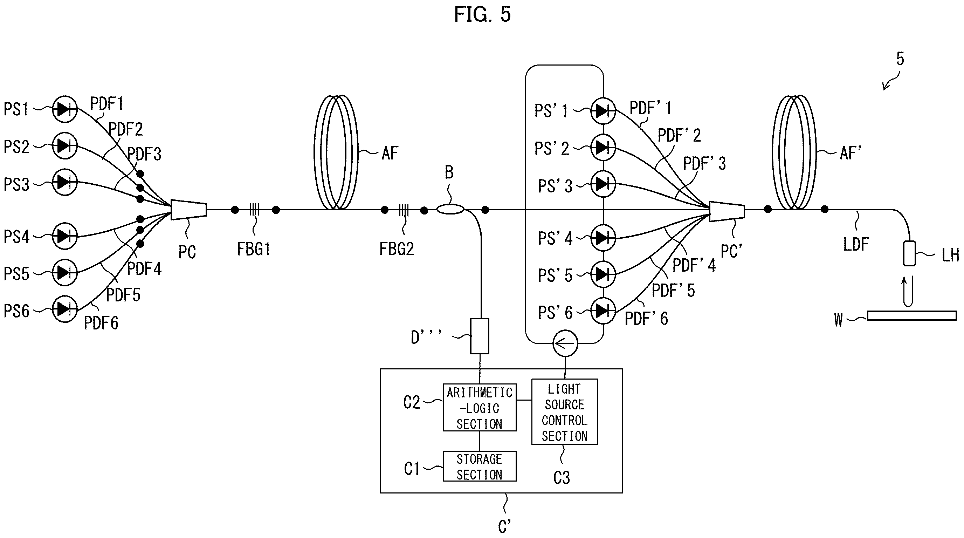

The following description will discuss a laser apparatus 5 in accordance with Embodiment 5 of the present invention, with reference to Fig. 5. Fig. 5 is a block diagram illustrating a configuration of the laser apparatus 5.

The laser apparatus 5 in accordance with Embodiment 5 is different from the laser apparatus 3 in accordance with Embodiment 3 in the following points.

Point of difference 1: The detector D, which is connected to the input port of the pump combiner PC and which detects at least one of Stokes light and anti-Stokes light guided in the direction from the downstream end to the upstream end, of the laser apparatus 3 in accordance with Embodiment 3 is replaced by a detector D''' that is connected to an optical divider B residing between the second fiber Bragg grating FBG2 and the pump combiner PC' and that detects Stokes light and anti-Stokes light guided in the direction from the upstream end to the downstream end.

Point of difference 2: the control section C, which controls driving current supplied to the pump light sources PS1 to PSm of the MO section, of the laser apparatus 3 in accordance with Embodiment 3 is replaced by a control section C' that controls driving current supplied to the pump light sources PS'1 to PS'*k* of the PA section. Note, however, that the control section C' of the laser apparatus 5 in accordance with Embodiment 5 carries out the control concerning the driving current for the pump light sources PS'1 to PS'*k* of the PA section based on the power of light detected by the detector D''', in the same manner as the control carried out by the control section C of the laser apparatus 3 in accordance with Embodiment 3 concerning the driving current for the pump light sources PS1 to PSm of the MO section based on the power of light detected by the detector D.

The detector D''' of the laser apparatus 5 in accordance with Embodiment 5 is, similarly to the detector D of the laser apparatus 3 in accordance with Embodiment 3, configured to detect light belonging to a wavelength range that includes at least one of Stokes light and anti-Stokes light in preference to light belonging to another wavelength range. Therefore, according to the laser apparatus 5 including the detector D''' or according to a monitoring device including the detector D''', it is possible to monitor the power of at least one of Stokes light and anti-Stokes light with good accuracy.

Furthermore, the detector D''' of the laser apparatus 5 in accordance with Embodiment 5 is, differently from the detector D of the laser apparatus 3 in accordance with Embodiment 3, connected to the optical divider B residing between the second fiber Bragg grating FBG2 and the pump combiner PC' and configured to detect at least one of Stokes light and anti-Stokes light guided in the direction from the upstream end to the downstream end. Therefore, according to the laser apparatus 5 in accordance with Embodiment 5, it is possible to monitor the power of at least one of Stokes light and anti-Stokes light before entering the PA section (i.e., Stokes light and anti-Stokes light outputted from the MO section). It is also possible, in a case where four-wave mixing has occurred in an optical fiber extending from the second fiber Bragg grating FBG2 to the optical divider B, to sense such an occurrence in an early stage. Furthermore, the control section C' is capable of starting, in an early stage, control based on at least one of Stokes light and anti-Stokes light resulting from the four-wave mixing that has occurred in the optical fiber.

Note that preferred arrangements discussed in Embodiment 1 can be employed also in the laser apparatus 5 in accordance with Embodiment 5. In a case where a preferred arrangement discussed in Embodiment 1 is employed in the laser apparatus 5 in accordance with Embodiment 5, effects corresponding to that preferred arrangement discussed in Embodiment 1 are obtained also in the laser apparatus 5 in accordance with Embodiment 5.

Embodiment 5 discussed an arrangement in which the control section C' controls driving current supplied to the pump light sources PS'1 to PS'*k* of the PA section; however, this does not imply any limitation. Specifically, the control section C' may be configured to control driving current supplied to the pump light sources PS1 to PSm of the MO section instead of or in addition to controlling the driving current supplied to the pump light sources PS'1 to PS'*k* of the PA section.

[Remarks on Embodiments 4 and 5]

The MO section in each of the arrangements discussed in Embodiments 4 and 5 is a resonator-type fiber laser apparatus. Note, however, that this does not imply any limitation. Specifically, the MO section may be provided with a seed light source other than the resonator-type fiber laser. The seed light source constituting the MO section can be, for example, a laser diode that emits laser light having a peak wavelength falling within the wavelength range of from 1000 nm to 1100 nm inclusive. A semiconductor laser device other than laser diodes, a solid laser device, a semiconductor laser device, a liquid laser device, or a gas laser device may be used instead of the laser diode.

The MOPA-type fiber laser discussed in each of Embodiments 4 and 5 is one in which a MO section and a PA section are connected directly. Note, however, that this does not imply any limitation. Specifically, a preamplifier section may be further provided between the MO section and the PA section. The preamplifier section can be, for example, an optical fiber having a core doped with a rare-earth element (i.e., amplifying optical fiber). Use of such a preamplifier section makes it possible to further increase the power of laser light outputted from the laser head LH. Additionally or alternatively, an acousto-optic element (acoustic optic modulation, or AOM) may further be provided between the MO section and the PA section. The acousto-optic element is controlled externally by electric current and is thereby capable of switching between an ON state that allows passage of seed light (light outputted from the MO section) and an OFF state that reflects the seed light. Use of such an acousto-optic element makes it possible to freely control the pulse pattern of laser light outputted from the laser head LH.

[Other embodiments]

Embodiments 1 and 2 each discussed a resonator-type fiber laser apparatus, and Embodiments 3, 4, and 5 each discussed a MOPA-type fiber laser apparatus. Note, however, that the scope of application of the present invention is not limited to fiber laser apparatuses of these types. That is, the present invention can be applied to fiber laser apparatuses of any type.

Furthermore, the scope of application of the present invention is not limited to fiber laser apparatuses. Specifically, a laser apparatus including a laser light source and a multi-mode fiber that guides laser light outputted from the laser light source is included within the scope of application of the present invention. Note, here, that the laser light source can be a solid laser device, a semiconductor laser device, a liquid laser device, or a gas laser device. For example, a laser apparatus including a YAG laser (an example of solid laser device) and a multi-mode fiber that guides laser light outputted from the YAG laser is an example of a laser apparatus included within the scope of application of the present invention. In such a laser apparatus, a multi-mode fiber may undergo four-wave mixing in which a plurality of guide modes are involved. Therefore, monitoring the power of at least one of Stokes light and anti-Stokes light resulting from four-wave mixing is effective also in such a laser laser apparatus.

Note that such a laser apparatus carries out a monitoring method involving a detecting step including detecting light, belonging to a wavelength range that includes the peak wavelength of at least one of Stokes light and anti-Stokes light (which result from, in a multi-mode fiber which guides laser light, four-wave mixing in which a plurality of guide modes are involved), in preference to light belonging to another wavelength range. Such a monitoring method makes it possible, irrespective of whether the method is carried out by such a laser apparatus or not, to monitor the power of at least one of the Stokes light and anti-Stokes light with good accuracy. Such a laser apparatus can be produced by a method including (1) a determining step including determining the peak wavelength of at least one of Stokes light and anti-Stokes light resulting from, in a multi-mode fiber, four-wave mixing in which a plurality of guide modes are involved and (2) a setting step including setting a wavelength range, in which the detector preferentially detects light, such that the wavelength range includes the peak wavelength determined in the determining step. Such a method makes it possible to produce a laser apparatus that is capable of monitoring the power of at least one of Stokes light and anti-Stokes light with good accuracy.

Aspects of the present invention can also be expressed as follows.

A monitoring device in accordance with an aspect of the present invention includes a detector (D, D', D", D''') configured to detect light, belonging to a wavelength range that includes a peak wavelength of at least one of Stokes light and anti-Stokes light, in preference to light belonging to another wavelength range, the Stokes light and anti-Stokes light resulting from, in a multi-mode fiber configured to guide laser light, four-wave mixing in which a plurality of guide modes are involved.

A monitoring device in accordance with an aspect of the present invention is arranged such that: in the four-wave mixing, a fundamental mode component and a higher order mode component of the laser light guided through the multi-mode fiber are involved as pump light; and a peak angular frequency $\omega_s$ of the Stokes light and a peak angular frequency $\omega_{as}$ of the anti-Stokes light satisfy the following equation (1) representing a frequency matching condition and the following equation (2a) or (2b) representing a phase matching condition:

$$\omega_s + \omega_{as} = 2\omega_p \dots (1)$$

$$\beta(\omega_s) + \beta'(\omega_{as}) = \beta'(\omega_p) + \beta(\omega_p) - \gamma(P + P') \dots (2a)$$

$$\beta'(\omega_s) + \beta(\omega_{as}) = \beta'(\omega_p) + \beta(\omega_p) - \gamma(P + P') \dots (2b),$$

where $\beta(\omega)$ represents a propagation constant of the multi-mode fiber with regard to the fundamental mode component having an angular frequency $\omega$, $\beta'(\omega)$ represents a propagation constant of the multi-mode fiber with regard to the higher order mode component having an angular frequency $\omega$, $\omega_p$ represents a peak angular frequency of the laser light, P represents power of the fundamental mode component of the laser light, P' represents power of the higher order mode component of the laser light, and $\gamma$ represents a non-linear coefficient.

A monitoring device in accordance with an aspect of the present invention is arranged such that the higher order mode component is LP11 mode.

A monitoring device in accordance with an aspect of the present invention is arranged such that: in the four-wave mixing, a first higher mode component and a second higher order mode component of the laser light guided through the multi-mode fiber are involved as pump light; and a peak angular frequency $\omega_s$ of the Stokes light and a peak angular frequency $\omega_{as}$ of the anti-Stokes light satisfy the following equation (1) representing a frequency matching condition and the following equation (2a') or (2b') representing a phase matching condition:

$$\omega_s + \omega_{as} = 2\omega_p \ \dots \ (1)$$

$$\beta'(\omega_s) + \beta''(\omega_{as}) = \beta''(\omega_p) + \beta'(\omega_p) - \gamma(P' + P'') \ \dots \ (2a')$$

$$\beta''(\omega_s) + \beta'(\omega_{as}) = \beta''(\omega_p) + \beta'(\omega_p) - \gamma(P' + P'') \ \dots \ (2b'),$$

where $\beta'(\omega)$ represents a propagation constant of the multi-mode fiber with regard to the first higher order mode component having an angular frequency $\omega$, $\beta''(\omega)$ represents a propagation constant of the multi-mode fiber with regard to the second higher order mode component having an angular frequency $\omega$, $\omega_p$ represents a peak angular frequency of the laser light, P' represents power of the first higher order mode component of the laser light, P'' represents power of the second higher order mode component of the laser light, and $\gamma$ represents a non-linear coefficient.

A monitoring device in accordance with an aspect of the present invention is arranged such that the first higher order mode component or the second higher order mode component is LP11 mode.

A monitoring device in accordance with an aspect of the present invention is arranged such that the light belonging to another wavelength range is the laser light.

A monitoring device in accordance with an aspect of the present invention is arranged such that the detector (D, D', D'', D''') is configured to preferentially detect light which belongs to a wavelength range including the peak wavelength of at least one of the Stokes light and the anti-Stokes light and which is greater in power than spontaneous emission.

A monitoring device in accordance with an aspect of the present invention is arranged such that the light belonging to another wavelength range is scattered light generated by stimulated Raman scattering of the laser light.

A monitoring device in accordance with an aspect of the present invention is arranged such that the detector (D, D', D'', D''') is configured to preferentially detect both (i) light belonging to a first wavelength range that includes the peak wavelength of the Stokes light and (ii) light belonging to a second wavelength range that includes the peak wavelength of the anti-Stokes light and that does not overlap the first wavelength range.

A monitoring device in accordance with an aspect of the present invention is arranged such that the detector (D, D', D'', D''') is configured to preferentially detect only light belonging to a wavelength range that includes the peak wavelength of the anti-Stokes light and that is shorter in wavelength than a peak wavelength of the laser light.

A monitoring device in accordance with an aspect of the present invention is arranged such that the detector (D, D', D'', D''') is configured to preferentially detect only light belonging to a wavelength range that includes the peak wavelength of the Stokes light and that is longer in wavelength than a peak wavelength of the laser light.

A monitoring device in accordance with an aspect of the present invention is arranged such that the detector (D, D', D'', D''') is configured to preferentially detect light belonging to a wavelength range that includes the peak wavelength of the Stokes light and that is longer in wavelength than the peak wavelength of the laser light and is shorter in wavelength than a peak wavelength of scattered light generated by stimulated Raman scattering of the laser light.

A monitoring device in accordance with an aspect of the present invention is arranged such that the detector (D, D', D'', D''') is configured to preferentially detect light belonging to at least one of the following wavelength ranges i) and ii): i) a wavelength range which is shorter in wavelength than a peak wavelength of the laser light and in which a lower limit is a wavelength shorter by 40 nm than the peak wavelength of the laser light; and ii) a wavelength range which is longer in wavelength than the peak wavelength of the laser light and in which an upper limit is a wavelength longer by 40 nm than the peak wavelength of the laser light.

A monitoring device in accordance with an aspect of the present invention is arranged such that the wavelength range, in which the detector (D, D', D'', D''') preferentially detects light, is changed in accordance with power of the laser light so that the wavelength range includes the peak wavelength of at least one of the Stokes light and the anti-Stokes light.

A monitoring device in accordance with an aspect of the present invention includes: any of the foregoing monitoring devices; and the multi-mode fiber.

A laser apparatus (1, 2, 3, 4, 5) in accordance with an aspect of the present invention further includes a reducing section configured to reduce scattered light generated by stimulated Raman scattering.

A laser apparatus (1, 3) in accordance with an aspect of the present invention is arranged such that the detector (D) is configured to detect at least one of the Stokes light and the anti-Stokes light having been guided in a direction from a downstream end of the laser apparatus to an upstream end of the laser apparatus.

A laser apparatus (2, 4, 5) in accordance with an aspect of the present invention is arranged such that the detector (D', D'', D''') is configured to detect at least one of the Stokes light and the anti-Stokes light having been guided in a direction from an upstream end of the laser apparatus to a downstream end of the laser apparatus.

A laser apparatus (1, 2, 3, 4, 5) in accordance with an aspect of the present invention further includes a control section (C, C') configured to control the laser apparatus based on power of the light detected by the detector (D, D', D", D'").

A laser apparatus (1, 2, 3, 4, 5) in accordance with an aspect of the present invention is arranged such that the control section (C, C') is configured to determine that light having a greater power than a threshold is the Stokes light and the anti-Stokes light, the threshold being a power 40 dB lower than power of the laser light.

A laser apparatus (1, 2, 3, 4, 5) in accordance with an aspect of the present invention further includes a pump light source (PS1 to PS$m$, PS'1 to PS'$k$) configured to emit pump light that is used to amplify the laser light, and is arranged such that the control section (C, C') is configured to, when power of the light detected by the detector (D, D', D", D'") is greater than a predetermined threshold, stop driving current from being supplied to the pump light source (PS1 to PS$m$, PS'1 to PS'$k$) or reduce the driving current supplied to the pump light source (PS1 to PS$m$, PS'1 to PS'$k$).

A laser apparatus (1, 2, 3, 4, 5) in accordance with an aspect of the present invention is arranged such that power of the laser light is 3 kW or greater.

A laser apparatus (1, 2, 3, 4, 5) in accordance with an aspect of the present invention includes: any of the foregoing monitoring devices; the multi-mode fiber; and a control section (C, C') configured to compare a peak power of Stokes light detected by the detector (D, D', D", D'") and a peak power of anti-Stokes light detected by the detector (D, D', D", D'") and control the laser apparatus based on greater one of the peak powers.

A monitoring method in accordance with an aspect of the present invention includes detecting light, belonging to a wavelength range that includes a peak wavelength of at least one of Stokes light and anti-Stokes light, in preference to light belonging to another wavelength range, the Stokes light and anti-Stokes light resulting from, in a multi-mode fiber configured to guide laser light, four-wave mixing in which a plurality of guide modes are involved.

A method of producing a laser apparatus (1, 2, 3, 4, 5) in accordance with an aspect of the present invention is a method of producing a laser apparatus (1, 2, 3, 4, 5) that includes (i) a multi-mode fiber configured to guide laser light and (ii) a detector (D, D', D", D'") configured to detect light belonging to a specific wavelength range in preference to light belonging to another wavelength range, the method including: a) determining a peak wavelength of at least one of Stokes light and anti-Stokes light resulting from, in the multi-mode fiber, four-wave mixing in which a plurality of guide modes are involved; and b) setting the specific wavelength range, in which the detector (D, D', D", D'") preferentially detects light, such that the specific wavelength range includes the peak wavelength determined in step a).

[Note]

The present invention is not limited to the foregoing embodiments, variations, or examples but can be altered by a skilled person in the art within the scope of the claims. The present invention also encompasses, in its technical scope, any embodiment derived by combining technical means disclosed in differing embodiments, variations, or examples. For example, although the foregoing embodiments each discussed a monitoring device consisting only of a detector, the monitoring device is not limited as such, provided that the monitoring device includes a detector. The monitoring device may also include one or more constituent elements other than the detector.

Reference Signs List

| 1, 2, 3, 4, 5 | laser apparatus |
|---|---|
| PS1 to PS$m$ | pump light source |
| PDF1 to PDF$m$ | pump delivery fiber |
| PC | pump combiner |
| AF | amplifying optical fiber |
| FBG1 to FBG2 | fiber Bragg grating |
| PS'1 to PS'$k$ | pump light source |
| PDF'1 to PDF'$k$ | pump delivery fiber |
| PC' | pump combiner |
| AF' | amplifying optical fiber |
| LDF | laser delivery fiber |
| LH | laser head |
| D, D', D", D'" | detector |
| C, C' | control section |

**Claims**

1. A monitoring device comprising a detector configured to detect light, belonging to a wavelength range that includes a peak wavelength of at least one of Stokes light and anti-Stokes light, in preference to light belonging to another wavelength range,
the Stokes light and anti-Stokes light resulting from, in a multi-mode fiber configured to guide laser light, four-wave mixing in which a plurality of guide modes are involved.

2. The monitoring device as set forth in claim 1, wherein:

   in the four-wave mixing, a fundamental mode component and a higher order mode component of the laser light guided through the multi-mode fiber are involved as pump light; and
   a peak angular frequency $\omega_s$ of the Stokes light and a peak angular frequency $\omega_{as}$ of the anti-Stokes light satisfy the following equation (1) representing a frequency matching condition and the following equation (2a) or (2b) representing a phase matching condition:

$$\omega_s + \omega_{as} = 2\omega_p \ \dots \ (1)$$

$$\beta(\omega_s) + \beta'(\omega_{as}) = \beta'(\omega_p) + \beta(\omega_p) - \gamma(P + P') \ \dots \ (2a)$$

$$\beta'(\omega_s) + \beta(\omega_{as}) = \beta'(\omega_p) + \beta(\omega_p) - \gamma(P + P') \ \dots \ (2b),$$

   where $\beta(\omega)$ represents a propagation constant of the multi-mode fiber with regard to the fundamental mode component having an angular frequency $\omega$, $\beta'(\omega)$ represents a propagation constant of the multi-mode fiber with regard to the higher order mode component having an angular frequency $\omega$, $\omega_p$ represents a peak angular frequency of the laser light, P represents power of the fundamental mode component of the laser light, P' represents power of the higher order mode component of the laser light, and $\gamma$ represents a non-linear coefficient.

3. The monitoring device as set forth in claim 2, wherein the higher order mode component is LP11 mode.

4. The monitoring device as set forth in claim 1, wherein:

   in the four-wave mixing, a first higher mode component and a second higher order mode component of the laser light guided through the multi-mode fiber are involved as pump light; and
   a peak angular frequency $\omega_s$ of the Stokes light and a peak angular frequency $\omega_{as}$ of the anti-Stokes light satisfy the following equation (1) representing a frequency matching condition and the following equation (2a') or (2b') representing a phase matching condition:

$$\omega_s + \omega_{as} = 2\omega_p \ \dots \ (1)$$

$$\beta'(\omega_s) + \beta''(\omega_{as}) = \beta''(\omega_p) + \beta'(\omega_p) - \gamma(P' + P'') \ \dots \ (2a')$$

$$\beta''(\omega_s) + \beta'(\omega_{as}) = \beta''(\omega_p) + \beta'(\omega_p) - \gamma(P' + P'') \ \dots \ (2b'),$$

   where $\beta'(\omega)$ represents a propagation constant of the multi-mode fiber with regard to the first higher order mode component having an angular frequency $\omega$, $\beta''(\omega)$ represents a propagation constant of the multi-mode fiber with regard to the second higher order mode component having an angular frequency $\omega$, $\omega_p$ represents a peak angular frequency of the laser light, P' represents power of the first higher order mode component of the laser light, P" represents power of the second higher order mode component of the laser light, and $\gamma$ represents a non-linear coefficient.

5. The monitoring device as set forth in claim 4, wherein the first higher order mode component or the second higher order mode component is LP11 mode.

6. The monitoring device as set forth in any one of claims 1 to 5, wherein the light belonging to another wavelength range is the laser light.

7. The monitoring device as set forth in any one of claims 1 to 6, wherein the detector is configured to preferentially detect light which belongs to a wavelength range including the peak wavelength of at least one of the Stokes light and the anti-Stokes light and which is greater in power than spontaneous emission.

8. The monitoring device as set forth in any one of claims 1 to 7, wherein the light belonging to another wavelength range is scattered light generated by stimulated Raman scattering of the laser light.

9. The monitoring device as set forth in any one of claims 1 to 8, wherein the detector is configured to preferentially detect both (i) light belonging to a first wavelength range that includes the peak wavelength of the Stokes light and (ii) light belonging to a second wavelength range that includes the peak wavelength of the anti-Stokes light and that does not overlap the first wavelength range.

10. The monitoring device as set forth in any one of claims 1 to 8, wherein the detector is configured to preferentially detect light belonging to a wavelength range that includes the peak wavelength of the anti-Stokes light and that is shorter in wavelength than a peak wavelength of the laser light.

11. The monitoring device as set forth in any one of claims 1 to 8, wherein the detector is configured to preferentially detect light belonging to a wavelength range that includes the peak wavelength of the Stokes light and that is longer in wavelength than a peak wavelength of the laser light.

12. The monitoring device as set forth in claim 11, wherein the detector is configured to preferentially detect light belonging to a wavelength range that includes the peak wavelength of the Stokes light and that is longer in wavelength than the peak wavelength of the laser light and is shorter in wavelength than a peak wavelength of scattered light generated by stimulated Raman scattering of the laser light.

13. The monitoring device as set forth in any one of claims 1 to 12, wherein the detector is configured to preferentially detect light belonging to at least one of the following wavelength ranges i) and ii):

    i) a wavelength range which is shorter in wavelength than a peak wavelength of the laser light and in which a lower limit is a wavelength shorter by 40 nm than the peak wavelength of the laser light; and
    ii) a wavelength range which is longer in wavelength than the peak wavelength of the laser light and in which an upper limit is a wavelength longer by 40 nm than the peak wavelength of the laser light.

14. The monitoring device as set forth in any one of claims 1 to 13, wherein the wavelength range, in which the detector preferentially detects light, is changed in accordance with power of the laser light so that the wavelength range includes the peak wavelength of at least one of the Stokes light and the anti-Stokes light.

15. A laser apparatus comprising:

    a monitoring device recited in any one of claims 1 to 14; and
    the multi-mode fiber.

16. The laser apparatus as set forth in claim 15, further comprising a reducing section configured to reduce scattered light generated by stimulated Raman scattering of the laser light.

17. The laser apparatus as set forth in claim 15 or 16, wherein the detector is configured to detect at least one of the Stokes light and the anti-Stokes light having been guided in a direction from a downstream end of the laser apparatus to an upstream end of the laser apparatus.

18. The laser apparatus as set forth in claim 15 or 16, wherein the detector is configured to detect at least one of the Stokes light and the anti-Stokes light having been guided in a direction from an upstream end of the laser apparatus to a downstream end of the laser apparatus.

**19.** The laser apparatus as set forth in any one of claims 15 to 18, further comprising a control section configured to control the laser apparatus based on power of the light detected by the detector.

**20.** The laser apparatus as set forth in claim 19, wherein the control section is configured to determine that light having a greater power than a threshold is the Stokes light and the anti-Stokes light, the threshold being a power 40 dB lower than power of the laser light.

**21.** The laser apparatus as set forth in claim 19 or 20, further comprising a pump light source configured to emit pump light that is used to amplify the laser light,
wherein the control section is configured to, when power of the light detected by the detector is greater than a predetermined threshold, stop driving current from being supplied to the pump light source or reduce the driving current supplied to the pump light source.

**22.** A laser apparatus comprising:

a monitoring device recited in claim 9;
the multi-mode fiber; and
a control section configured to compare a peak power of Stokes light detected by the detector and a peak power of anti-Stokes light detected by the detector and control the laser apparatus based on greater one of the peak powers.

**23.** The laser apparatus as set forth in any one of claims 15 to 22, wherein power of the laser light is 3 kW or greater.

**24.** A monitoring method comprising
detecting light, belonging to a wavelength range that includes a peak wavelength of at least one of Stokes light and anti-Stokes light, in preference to light belonging to another wavelength range,
the Stokes light and anti-Stokes light resulting from, in a multi-mode fiber configured to guide laser light, four-wave mixing in which a plurality of guide modes are involved.

**25.** A method of producing a laser apparatus that includes (i) a multi-mode fiber configured to guide laser light and (ii) a detector configured to detect light belonging to a specific wavelength range in preference to light belonging to another wavelength range, the method comprising:

a) determining a peak wavelength of at least one of Stokes light and anti-Stokes light resulting from, in the multi-mode fiber, four-wave mixing in which a plurality of guide modes are involved; and
b) setting the specific wavelength range, in which the detector preferentially detects light, such that the specific wavelength range includes the peak wavelength determined in step a).

FIG. 1

# FIG. 2

FIG. 3

EP 3 745 545 A1

FIG. 4

EP 3 745 545 A1

FIG. 5

EP 3 745 545 A1

## FIG. 6

FIG. 7

<div align="center">

**INTERNATIONAL SEARCH REPORT**

</div>

| | International application No. |
|---|---|
| | PCT/JP2019/000942 |

**A. CLASSIFICATION OF SUBJECT MATTER**
Int.Cl. H01S3/00(2006.01)i, G01N21/65(2006.01)n

According to International Patent Classification (IPC) or to both national classification and IPC

**B. FIELDS SEARCHED**

Minimum documentation searched (classification system followed by classification symbols)
Int.Cl. H01S3/00-3/30, G01N21/65, B23K26/00-26/70, G02F1/00-1/125,
G02F1/21-7/00, H01L31/00-31/02, H01L31/08-31/10, H01L31/18

Documentation searched other than minimum documentation to the extent that such documents are included in the fields searched
  Published examined utility model applications of Japan    1922-1996
  Published unexamined utility model applications of Japan  1971-2019
  Registered utility model specifications of Japan          1996-2019
  Published registered utility model applications of Japan  1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2018/008251 A1 (FUJIKURA LTD.) 11 January 2018, paragraphs [0002], [0023]-[0064], fig. 1-9 & JP 2018-6596 A | 1-25 |
| Y | JP 2015-505064 A (OFS FITEL, LLC) 16 February 2015, paragraphs [0015]-[0045] & WO 2013/101429 A1 & US 2014/0334766 A1, paragraphs [0019]-[0049] | 1-25 |

☒ Further documents are listed in the continuation of Box C.      ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 31.01.2019 | 12.02.2019 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

EP 3 745 545 A1

**INTERNATIONAL SEARCH REPORT**

International application No.

PCT/JP2019/000942

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2012-518806 A (UNIVERSITE DE LIMOGES) 16 August 2012, paragraphs [0015]-[0133]<br>& FR 2942553 A1 & CA 2752995 A1 & WO 2010/094863 A1, page 4, line 16 to page 23, line 22 | 1-25 |
| Y | JP 2015-95641 A (FUJIKURA LTD.) 18 May 2015, paragraphs [0008], [0009], [0032]-[0063], fig. 1-6<br>& JP 5680170 B1 & WO 2015/072198 A1 & EP 3070791 A1 & CN 105723576 A & US 2016/0254637 A1, paragraphs [0007], [0008], [0042]-[0073], fig. 1-6 | 1-25 |
| Y | WO 2017/073609 A1 (FUJIKURA LTD.) 04 May 2017, paragraphs [0002]-[0019], [0021]-[0072], fig. 1-4<br>& EP 3370307 A1 & CN 108352670 A & US 2018/0287331 A1, paragraphs [0002]-[0020], [0025]-[0076], fig. 1-4 | 1-25 |
| A | JP 2013-250280 A (YOKOGAWA ELECTRIC CORPORATION) 12 December 2013, paragraphs [0018]-[0028], fig. 1 (Family: none) | 1-25 |
| A | JP 2-276932 A (TOKYO ELECTRIC POWER CO., INC.) 13 November 1990, specification, page 4, lower left column, line 19 to page 9, upper right column, line 11, fig. 1-17<br>& JP 7-167717 A & GB 2239310 A & DE 4019980 A1 & US 5113277 A, column 10, line 20 to column 17, line 59, fig. 1-17 | 1-25 |
| A | US 2015/0188283 A1 (RAMACHANDRAN) 02 July 2015, paragraphs [0022]-[0049], fig. 1-14<br>& WO 2013/169626 A1 | 1-25 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015095641 A